# FASCICULE DE BREVET EUROPEEN

(11) **EP 3 638 614 B1**
(45) Date de publication et mention de la délivrance du brevet: **23.02.2022**
(21) Numéro de dépôt: 18736986.3
(22) Date de dépôt: 31.05.2018
(51) Int. Cl.: G01S 13/931, B66F 11/04, B66F 17/00

(54) **NACELLE ELEVATRICE A PLACEMENT AUTOMATIQUE EN POSITION COMPACTE DE TRANSPORT**
HEBEBÜHNE MIT AUTOMATISCHER PLAZIERUNG IN KOMPAKTER TRANSPORTSTELLUNG
AERIAL LIFT WITH AUTOMATIC PLACEMENT IN COMPACT TRANSPORT POSITION

(30) Priorité: 12.06.2017 FR 1755204
(43) Date de publication de la demande: 22.04.2020
(73) Titulaire: Haulotte Group, 42420 Lorette (FR)
(72) Inventeur: BONNEFOY, Nicolas, 42400 Saint-Chamond (FR); DORAY, Jean-Baptiste, 38670 Chasse-sur-Rh ne (FR)
(74) Mandataire: Reinhardt, Yves
(86) Numéro de dépôt international: PCT/FR2018/051258
(87) Numéro de publication internationale: WO 2018/229381

(56) Documents cités:
- FR-A1- 2 836 468

## Description

La présente invention concerne le domaine des plates-formes élévatrices mobiles de personnel (désignées aussi par l'acronyme PEMP) encore communément appelées nacelles élévatrices.

Elle porte plus particulièrement sur une nacelle élévatrice susceptible d'être transportée sur remorque ou camion-plateau et comprenant un châssis muni d'organes de translation au sol, une plate-forme de travail et une structure élévatrice agencée sur le châssis laquelle structure élévatrice comprend une flèche apte à être levée et abaissée par modification de son inclinaison par rapport au châssis et un bras pendulaire monté par une première extrémité à l'extrémité supérieure de la flèche de manière à pouvoir être levé et abaissé par rapport à la flèche par pivotement, le bras pendulaire supportant la plate-forme de travail à une deuxième extrémité qui est du côté opposé à sa première extrémité. La plate-forme de travail comporte généralement un pupitre de commande permettant à l'opérateur de commander la structure élévatrice, voire aussi la translation de la nacelle élévatrice au sol.

La structure élévatrice comporte souvent d'autres possibilités de mouvements. Il est fréquent qu'elle comporte une tourelle montée pivotante sur le châssis, que la flèche soit télescopique et que la plate-forme de travail soit montée pivotante autour d'un axe vertical par rapport au bras pendulaire. Suivant une catégorie de nacelles élévatrices, la flèche est montée sur le châssis par le biais d'un bras articulé de type pantographique supportant à son extrémité supérieure la flèche.

L'on pourra se référer à FR 2 836 468 A1 qui divulgue une nacelle élévatrice correspondant au préambule de la revendication 1.

Une difficulté posée par ce type de nacelles élévatrices est liée à leur transport sur remorque ou camion-plateau utilisé pour les amener sur un chantier ou pour les ramener à leur lieu d'entreposage. Leur transport nécessite qu'elles soient mises dans une position compacte dans laquelle leur longueur est limitée et leur hauteur compatible avec le transport. Souvent, le bras pendulaire et la plate-forme sont repliés sous la flèche, la plate-forme de travail étant inclinée de manière que son plancher soit orienté vers le sol.

L'opération de mise en position compacte de transport est réalisée depuis un poste de commande agencé sur le châssis ou la tourelle. Elle nécessite généralement de réaliser des opérations de commande des différentes parties de la structure élévatrice dans un ordre précis. L'opération est réalisée par le transporteur qui n'est pas l'utilisateur de la nacelle sur chantier alors qu'elle est complexe, varie d'une nacelle élévatrice à l'autre et que le transporteur n'a pas une connaissance des particularités de chaque modèle. De plus, la position compacte de transport doit être adaptée à la configuration de la remorque telle que la partie de plancher relevé à l'avant d'une semi-remorque à col de cygne ou encore le plateau qui comporte d'autres équipements faisant obstacle au repli de la structure élévatrice de la nacelle élévatrice.

De surcroit, pour réaliser la mise en position compacte, l'opérateur se retrouve sur le bord du plateau de la remorque ou du camion et doit appuyer simultanément sur deux boutons du panneau de commande sur le châssis ou la tourelle de la nacelle élévatrice pour provoquer à chaque fois le mouvement souhaité de la structure élévatrice, à savoir un bouton dit *d'homme mort* et celui correspondant au mouvement souhaité. Cette position a pour inconvénient de fournir une mauvaise visibilité à l'opérateur et il existe aussi un risque de chute de l'opérateur. Ce dernier inconvénient est pallié pour certaines nacelles élévatrices - telles que celles commercialisées par la déposante sous la référence H28TJ - en leur adjoignant une télécommande filaire dédiée à la mise en position transport qui permet de s'écarter de la nacelle élévatrice pour commander les séquences de mouvements. Cette solution laisse cependant subsister les difficultés mentionnées plus haut.

Le but de la présente invention est de pallier au moins partiellement les inconvénients précités. Selon un aspect, l'invention vise plus particulièrement à faciliter la mise en position compacte de transport de la nacelle élévatrice.

A cette fin, la présente invention propose une nacelle élévatrice susceptible d'être transportée sur remorque ou camion-plateau, comprenant :
- un châssis muni d'organes de translation au sol,
- une plate-forme de travail comprenant un plancher et un garde-corps,
- une structure élévatrice agencée sur le châssis et comprenant :
   ∘ une flèche apte à être levée et abaissée par modification de son inclinaison par rapport au châssis,
   ∘ un bras pendulaire monté par une première extrémité à l'extrémité supérieure de la flèche de manière à pouvoir être levé et abaissé par rapport à la flèche par pivotement, le bras pendulaire supportant la plateforme de travail à une deuxième extrémité qui est du côté opposé à sa première extrémité,
- un système de détection d'obstacle pour détecter la proximité de la plate-forme avec un obstacle ; et
- une électronique de bord prévue pour mettre automatiquement la nacelle élévatrice en position compacte sur requête d'un opérateur, l'électronique de bord commandant la structure élévatrice en fonction des informations de détection fournies par le système de détection d'obstacle de manière à amener automatiquement la nacelle élévatrice, en tenant compte de l'environnement de la nacelle élévatrice, dans une position compacte dans laquelle la nacelle élévatrice est apte au transport sur remorque ou camion-plateau.

Suivant des modes de réalisation préférés, l'invention comprend une ou plusieurs des caractéristiques suivantes :
- le système de détection d'obstacle comprend au moins un capteur de proximité, de préférence deux, pour détecter la proximité aussi bien d'un obstacle sous le plancher de la plate-forme qu'un obstacle devant le côté frontal de la plate-forme qui est à l'opposé du bras pendulaire ;
- l'électronique de bord est prévue pour commander la structure élévatrice de manière que dans la position compacte, le bras pendulaire soit replié sous la flèche et le plancher de la plate-forme soit incliné par rapport à l'horizontale de manière que le bord frontal inférieur de la plate-forme soit dirigé vers le sol et en contact avec celui-ci, l'électronique de bord étant prévue pour amener le bord frontal du plancher en contact avec le sol en maximisant l'abaissement de l'extrémité supérieure de la flèche ;
- la flèche est télescopique, l'électronique de bord étant prévue pour commander la structure élévatrice pour que, dans la position compacte, la flèche soit complètement rétractée ;
- la plate-forme est apte à être pivotée autour d'un axe vertical par rapport au bras pendulaire, l'électronique de bord étant prévue pour commander la structure élévatrice pour que, dans la position compacte, la plate-forme soit centrée par rapport au bras pendulaire ;
- la flèche est montée sur le châssis par le biais d'un bras articulé supportant à son extrémité supérieure la flèche, dans laquelle :
   ∘ la flèche est apte à être levée et abaissée par modification de son inclinaison par rapport au bras articulé, et
   ∘ l'extrémité supérieure du bras articulé est apte à être levée et abaissée verticalement par dépliement et repliement respectivement du bras articulé,
   l'électronique de bord étant prévue pour commander la structure élévatrice pour que, dans la position compacte, le bras articulé soit complètement abaissé ;
- lors de la mise en position compacte, l'électronique de bord est prévue pour commander la structure élévatrice de manière à élever l'extrémité supérieure de la flèche en cas de détection d'un obstacle à proximité de la plate-forme par le système de détection d'obstacle ;
- lors de la mise en position compacte, l'électronique de bord est prévue pour lever la flèche en cas de détection d'un obstacle à proximité de la plate-forme par le système de détection d'obstacle ;
- l'électronique de bord est prévue pour lever la flèche pendant une durée prédéterminée en cas de détection d'un obstacle ;
- l'électronique de bord est en outre prévue pour arrêter le ou les mouvement(s) de la structure élévatrice en cours lorsqu'un obstacle est détecté à proximité de la plate-forme, puis continuer le ou les mouvement(s) en cours après avoir levé la flèche si le système de détection d'obstacle a cessé de détecter un obstacle à proximité de la plate-forme ;
- dans un mode de réalisation particulièrement préféré, le bras pendulaire est monté à l'extrémité supérieure de la flèche par le biais d'un support, le bras pendulaire étant monté par sa première extrémité sur le support de manière à pouvoir être levé et abaissé par pivotement par rapport au support et le support étant monté pivotant autour d'un axe horizontal à l'extrémité supérieure de la flèche, le support faisant partie d'un système de maintien à niveau de la plateforme pour maintenir sensiblement horizontal le plancher de la plateforme par pivotement du support en cas de modification de l'inclinaison de la flèche par rapport au châssis lorsque la nacelle élévatrice est en utilisation, et l'électronique de bord est prévue pour pouvoir commander le pivotement du support du système de maintien à niveau de la plate-forme, le système de maintien à niveau de la plate-forme étant prévu pour faire pivoter le support en corrélation avec la modification de l'inclinaison de la flèche de manière autonome par rapport à la commande du pivotement du support par l'électronique de bord, et l'électronique de bord est prévue pour amener automatiquement la nacelle élévatrice dans la position compacte en deux phases successives :
   ∘ une première phase dans laquelle l'électronique de bord commande la structure élévatrice de manière à aboutir à la fin de la première phase à ce que la structure élévatrice soit dans une configuration correspondant à la position compacte de la nacelle élévatrice, sauf en ce qui concerne l'angle d'inclinaison de la flèche et éventuellement l'angle de pivotement du support du système de maintien à niveau de la plate-forme et en ce que le bord frontal inférieur de la plate-forme est hors contact avec le sol, et
   ∘ une deuxième phase dans laquelle l'électronique de bord commande l'inclinaison de la flèche, le pivotement du support du système de maintien à niveau de la plate-forme et éventuellement le levage du bras pendulaire par rapport au support de manière à aboutir à la fin de la deuxième phase à la position compacte de la nacelle élévatrice,
      dans laquelle, à la fin de la première phase, l'angle de pivotement du support du système de maintien à niveau de la plate-forme est tel que le bras pendulaire est replié sous la flèche, et lors de la deuxième phase, l'électronique de bord est prévue pour appliquer une séquence consistant à :
      ∘ i) abaisser la flèche, et
      ∘ ii) en cas de détection d'un obstacle à proximité de la plate-forme par le système de détection d'obstacle, arrêter d'abaisser la flèche et faire pivoter le support du système de maintien à niveau de la plate-forme pour replier le bras pendulaire vers la flèche, puis continuer à abaisser la flèche si la détection de la proximité d'obstacle a cessé,
      et dans le cas où la flèche a été abaissée jusqu'en butée basse lors de ladite séquence, l'électronique de bord applique une séquence supplémentaire pour amener le bord frontal inférieur de la plate-forme en contact avec le sol en faisant pivoter le support du système de maintien à niveau de la plate-forme de manière à éloigner le bras pendulaire de la flèche et/ou en faisant lever le bras pendulaire par rapport au support du système de maintien à niveau de la plate-forme ;
- la conception de la structure élévatrice eu égard à ses possibilités de mouvement exclut toute possibilité d'interférence de la plate-forme avec une autre partie de la nacelle élévatrice, et l'électronique de bord est prévue pour que lorsqu'elle fait pivoter le support du système de maintien à niveau de la plate-forme dans l'étape (ii) de ladite séquence de la deuxième phase, elle le fasse pivoter jusqu'en butée, et/ou l'électronique de bord est prévue pour faire pivoter le support du système de maintien à niveau de la plate-forme de manière à être en butée à la fin de la première phase ;
- lors de la première phase, l'électronique de bord est prévue pour commander la structure élévatrice de manière à élever l'extrémité supérieure de la flèche en cas de détection d'un obstacle à proximité de la plate-forme par le système de détection d'obstacle ;
- lors de la première phase, l'électronique de bord est prévue pour lever la flèche en cas de détection d'un obstacle à proximité de la plate-forme par le système de détection d'obstacle ; de préférence, l'électronique de bord est prévue pour lever la flèche pendant une durée prédéterminée en cas de détection d'un obstacle ; et avantageusement, l'électronique de bord est en outre prévue pour arrêter le ou les mouvement(s) de la structure élévatrice en cours lorsqu'un obstacle est détecté à proximité de la plate-forme, puis continuer le ou les mouvement(s) en cours après avoir levé la flèche si le système de détection d'obstacle a cessé de détecter un obstacle à proximité de la plate-forme ;
- l'électronique de bord est prévue pour vérifier l'absence de charge et/ou de personne à bord de la plate-forme avant d'amener automatiquement la nacelle élévatrice dans la position compacte, de préférence en coopérant avec un système de mesure de charge présente sur la plate-forme et/ou un système de détection d'attache d'un harnais pour personne(s) à bord de la plate-forme ;
- l'électronique de bord est en outre prévue pour mettre automatiquement la nacelle élévatrice en position d'accès à la plate-forme à partir de la position compacte dans laquelle la nacelle élévatrice a été préalablement mise de manière automatique par l'électronique de bord, dans laquelle position d'accès le plancher de la plate-forme est sensiblement horizontal et à une distance du sol permettant à un opérateur au sol d'accéder sur la plate-forme ;
- lors de la mise en position d'accès de la nacelle élévatrice, l'électronique de bord est prévue pour appliquer automatiquement une séquence comprenant les étapes successives suivantes :
   a) élever l'extrémité supérieure de la flèche, de préférence par levage pendant un temps prédéterminé du bras articulé ou, à défaut, de la flèche ;
   b) faire pivoter le support du système de maintien horizontal jusqu'à ce que le plancher de la plate-forme soit sensiblement horizontal en coopérant avec un dispositif de détermination de l'horizontalité du plancher ;
   c) abaisser complètement la flèche et le cas échéant le bras articulé ;
   d) abaisser le bras pendulaire par rapport à la flèche en position d'abaissement maximale ou à un niveau d'abaissement compatible avec l'environnement pour éviter une interférence de la plate-forme avec l'environnement lequel niveau d'abaissement est déterminé en fonction des informations de détection fournies par le système de détection d'obstacle.

D'autres aspects, caractéristiques et avantages de l'invention apparaîtront à la lecture de la description qui suit d'un mode de réalisation préféré de l'invention, donnée à titre d'exemple et en référence au dessin annexé.
Les figures 1 à 3 représentent différentes vues d'une même nacelle élévatrice selon un mode de réalisation de l'invention qui illustrent les différentes possibilités de mouvements de sa structure élévatrice : les figures 1 et 3 sont des vues de côté de la nacelle élévatrice respectivement à l'état replié et à l'état déployé au maximum tandis que la figure 2 est une vue de dessus.
La figure 4 est une vue locale de la flèche de la nacelle élévatrice qui illustre le système de maintien à niveau de sa plate-forme.
La figure 5 représente une vue de côté de le même nacelle élévatrice, mais mise en position compact de transport sur une remorque plate.
Les figures 6 à 8 illustrent le logigramme de commandes mis en œuvre par l'électronique de bord de cette nacelle élévatrice pour l'amener automatiquement en position compacte de transport.
Les figures 9 à 15 représentent des vues de côté de la nacelle élévatrice illustrant différentes étapes du placement automatique en position compacte de transport par application du logigramme des figures 6 à 8 pour un exemple d'environnement et de configuration de départ de la nacelle élévatrice.
La figure 16 est un logigramme de commandes mis en œuvre par l'électronique de bord de la nacelle élévatrice pour l'amener dans une position prête à l'utilisation depuis la position compacte de transport dans laquelle l'électronique de bord l'avait précédemment placée.

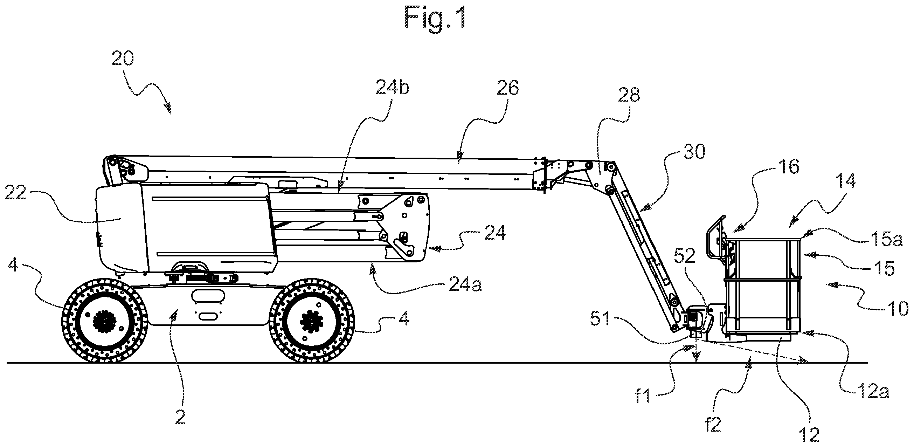

Comme cela est visible sur la figure 1, la nacelle élévatrice selon le mode de réalisation détaillé en référence aux figures comprend un châssis 2 équipé de roues 4 pour sa translation au sol, étant précisé qu'au moins deux des roues 4 sont de préférence directrices. Alternativement ou en combinaison, le châssis 2 peut être équipé de chenilles aux mêmes fins. Le châssis 2 est motorisé pour assurer le déplacement autonome de la nacelle élévatrice au sol.

La nacelle élévatrice comprend une structure élévatrice 20 supportant une plateforme de travail 10 prévue pour recevoir à bord du personnel et du matériel en vue de réaliser des travaux en hauteur. La plate-forme 10 comprend un plancher 12 et un garde-corps 14. Un pupitre de commande 16 est agencé sur la plate-forme 10. Il permet à un opérateur à bord de la plate-forme de commander la structure élévatrice pour déplacer la plate-forme en hauteur jusqu'à la position souhaitée, ainsi que de faire déplacer le châssis 2 au sol.

La structure élévatrice 20 comprend une tourelle 22 montée sur le châssis 2, un bras articulé 24 monté sur la tourelle 22, une flèche 26 montée à l'extrémité supérieure du bras articulé 24 et un bras pendulaire 30 monté par une extrémité à l'extrémité supérieure de la flèche 26 tandis que l'autre extrémité du bras pendulaire 30 supporte la plate-forme 10.

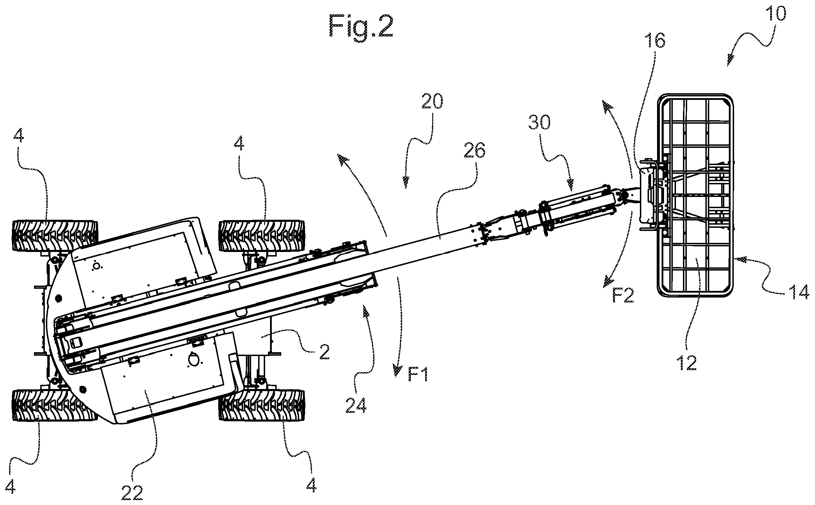

La tourelle 22 est montée pivotante autour d'un axe vertical sur le châssis 2, ce qui permet de modifier l'orientation du reste de la structure élévatrice 20 et de la plateforme 10 par rapport au châssis 2. Cette possibilité de rotation de la tourelle 22 est illustrée par la flèche F1 sur la figure 2 dans laquelle la tourelle 22 a été tournée comparée à la figure 1 où elle est alignée avec le châssis 2.

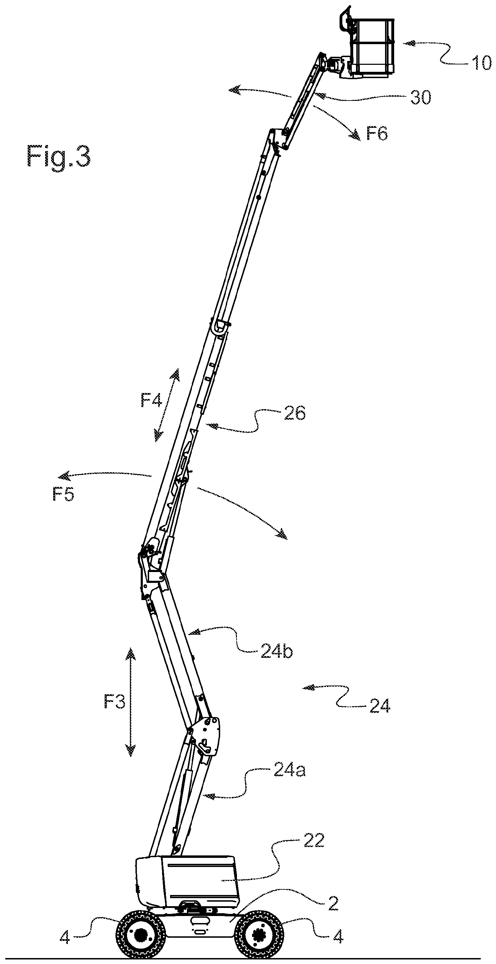

Comme cela est le mieux visible sur la figure 3, le bras articulé 24 comprend deux parallélogrammes 24a et 24b agencés de manière à former un pantographe. De ce fait, son extrémité supérieure est apte à être levée et abaissée verticalement par dépliement et repliement respectivement du bras articulé 24 par rapport à la tourelle 22 : cf. cette possibilité de mouvement illustrée par la flèche F3. Il permet ainsi d'élever et redescendre la flèche 26 sans modification angulaire de la flèche 26 par rapport au châssis 2.

La flèche 26 est montée pivotante à l'extrémité supérieure du bras articulé 24 pour pouvoir être levée et abaissée par modification de son inclinaison par rapport au bras articulé 24 : cf. la flèche F5 illustrant ce mouvement de pivotement sur la figure 3. Par ailleurs, la flèche 26 est télescopique, ce qui permet de la rallonger ou de la raccourcir : cf. la flèche F4.

Le bras pendulaire 30 est monté à l'extrémité supérieure de la flèche 26 de manière à pouvoir être levé et abaissé par rapport à la flèche 26 par pivotement : cf. la flèche F6 sur la figure 3. Le bras pendulaire 30, plus court que la flèche 26, permet d'adapter localement la hauteur d'élévation de la plate-forme 10 sans agir sur la flèche 26.

Le bras pendulaire 30 a une structure de parallélogramme déformable sous l'action d'un vérin, ce qui permet de conserver constant l'angle d'inclinaison de la plateforme 10 par rapport à l'horizontale - et plus particulièrement de la garder horizontale lorsque la nacelle élévatrice est en utilisation - lorsque le bras pendulaire 30 est levé ou abaissé.

La plate-forme 10 est montée pivotante par rapport au bras pendulaire 30 autour d'un axe s'étendant verticalement lorsque la nacelle élévatrice est en cours d'utilisation, c'est-à-dire lorsque le plancher 12 de la plate-forme est horizontal : cf. la flèche F2 sur la figure 2 sur laquelle la plate-forme 10 est représentée pivotée d'un certain angle par rapport au bras pendulaire 30 tandis qu'elle est alignée avec lui sur les figures 1 et 3.

La nacelle élévatrice comprend des actionneurs affectés à chacun des mouvements précités qui peuvent être commandés depuis le pupitre de commande 16. Plus particulièrement, il peut classiquement s'agir d'actionneurs hydrauliques et notamment de vérins hydrauliques pour ce qui concerne les mouvements de levage et d'abaissement précédemment décrits pour le bras articulé 24, la flèche 26 et le bras pendulaire 30, ainsi que les mouvements d'extension de la flèche 26 et de pivotement de la plate-forme 10 par rapport au bras pendulaire 30.

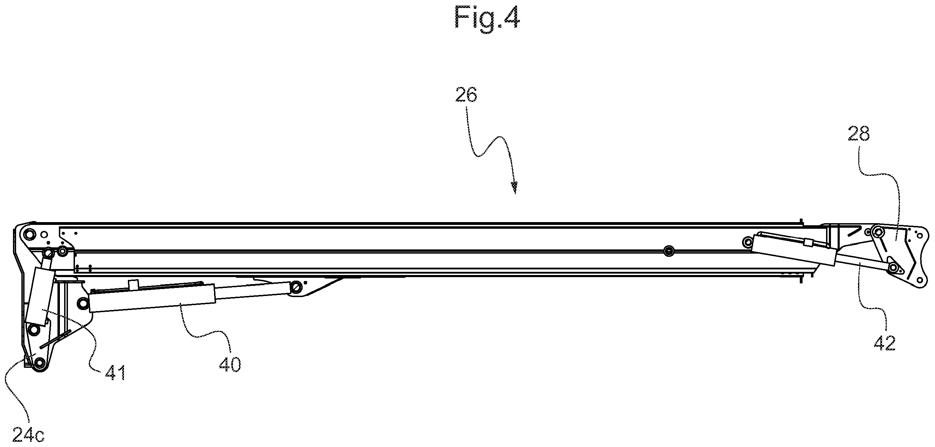

La nacelle élévatrice comprend aussi un système de maintien à niveau de la plateforme 10 qui est illustré à la figure 4. Comme déjà mentionné, un vérin hydraulique, référencé 40, permet d'abaisser ou lever la flèche 26 par rapport au bras articulé 24. Pour cela, le vérin 40 est interposé entre un support de liaison 24c et la flèche 26, le support de liaison 24c faisant partie du bras articulé 24 et la flèche 26 étant montée pivotante sur le support de liaison 24c. Lorsque la nacelle élévatrice est en utilisation, le système de maintien à niveau de la plate-forme a pour fonction de maintenir le plancher 12 de la plate-forme 10 sensiblement horizontal lorsque l'inclinaison de la flèche 26 est modifiée.

En l'occurrence, le système de maintien à niveau de la plate-forme 10 est un système à deux vérins hydrauliques 41, 42 agencés en maître/esclave. Le vérin maître 41 est relié entre le support de liaison 24c et la flèche 26. A l'extrémité supérieure de la flèche 26, le bras pendulaire 30 est monté à la flèche 26 par le biais d'un support de liaison 28 monté pivotant autour d'un axe horizontal à l'extrémité supérieure de la flèche 26. Le vérin esclave 42 est monté entre la flèche 26 et le support de liaison 28. Les vérins 41, 42 sont insérés dans un circuit hydraulique fermé de sorte que, en cas de variation de l'inclinaison de la flèche 26, tout fluide hydraulique chassé ou aspiré dans le vérin maître 41 est respectivement aspiré ou chassé dans le vérin esclave 42. Cela a pour effet de varier en correspondance l'angle du bras pendulaire 30 par rapport à la flèche 26 et de maintenir de ce fait le plancher 12 de la plate-forme 10 sensiblement horizontal. Ce type de système maître/esclave de maintien à niveau de la plate-forme 10 est connu en soi et est exemplifié notamment dans US 4,754,840.

En variante, le système de maintien à niveau peut être basé sur un système autre que du type maître/esclave, notamment en omettant le vérin 41 et en commandant la longueur d'extension du seul vérin 42 par une électronique de bord de la nacelle élévatrice en fonction d'un capteur déterminant l'angle d'inclinaison de la flèche 26 par rapport au châssis 2. Ce type de système de maintien à niveau de la plate-forme 10 est également connu en soi, un exemple étant fourni par US 2012/0211301 A1.

Dans la suite, nous allons décrire le procédé mis en œuvre par l'électronique de bord de la nacelle élévatrice pour placer automatiquement la nacelle élévatrice dans une position compacte de transport sur remorque ou camion-plateau.

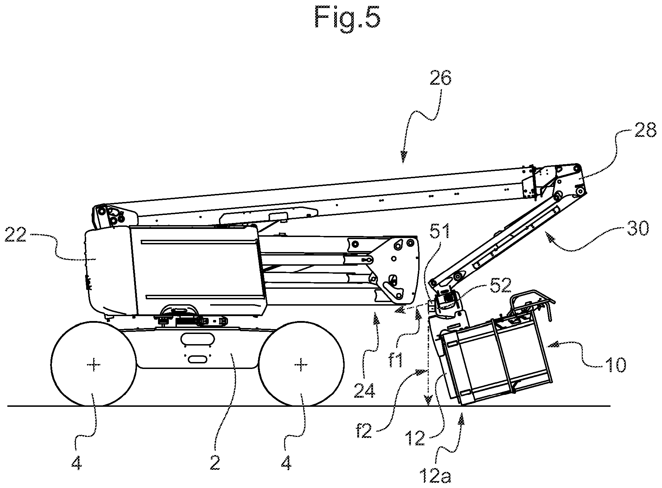

La figure 1 illustre une position repliée de la nacelle élévatrice dans laquelle le plancher 10 de la plate-forme 10 est horizontal et à faible hauteur du sol. La nacelle élévatrice est généralement mise dans cette position pour permettre l'accès des personnes à bord de la plate-forme 10 depuis le sol ou au contraire pour quitter celle-ci. Mais la nacelle élévatrice n'est généralement pas transportée sur remorque ou camion-plateau dans une telle configuration car l'encombrement en longueur reste important. La figure 5 illustre la position compacte dans laquelle la nacelle élévatrice est généralement placée pour la transporter. Comme cela est visible, le bras pendulaire 30 est abaissé sous la flèche 26 et le plancher 12 est orienté vers le sol, le bord frontal inférieur 12a de la plate-forme 10 étant en contact avec celui-ci. Cependant, la position compacte de transport n'est pas prédéfinie dans la mesure où elle peut être adaptée à l'environnement sur la remorque ou le camion plateau, notamment en cas de différence de niveau du plateau par exemple au niveau d'un col de cygne d'une remorque.

Pour permettre le placement automatique de la nacelle élévatrice en position compacte de transport, la nacelle élévatrice est pourvue d'un système de détection d'obstacle pour détecter la proximité de la plate-forme 10 avec un obstacle.

Dans ce mode de réalisation, il s'agit de deux capteurs de proximité 51, 52 agencés sur le dessous d'une pièce de liaison du plancher 12 de la plate-forme 10 au bras pendulaire 30 : cf. figure 1. Les capteurs de proximité 51 et 52 sont de préférence des capteurs ultrasons ou photoélectriques et peuvent être de tout type approprié existant sur le marché. Les faisceaux de détection - symbolisés par les flèches f1 et f2 - des capteurs 51, 52 sont orientés transversalement l'un par rapport à l'autre pour détecter aussi bien un obstacle sous le plancher 12 qu'en avant du bord frontal inférieur 12a de la plate-forme 10. Par commodité, les capteurs 51, 52 et les flèches f1, f2 n'ont été représentés que sur les figures 1 et 5. En l'occurrence, le faisceau de détection f1 du capteur 51 est orienté perpendiculairement au plancher 12 vers le bas, c'est-à-dire vers le sol lorsque le plancher 12 est horizontal. Le faisceau de détection f2 du capteur 52 s'étend obliquement sous le plancher 12 en direction du bord frontal inférieur 12a en passant sous celui-ci de manière à détecter un obstacle devant le bord frontal inférieur 12.

La position et le nombre de capteurs de proximité peuvent être modifiés notamment en fonction de la configuration de la plate-forme 10 et de la structureélévatrice 20. En particulier, pour réduire les coûts dans le cas d'une nacelle élévatrice équipée d'une petite plateforme 10, le capteur 51 peut être omis, le capteur 52 étant alors utilisé seul pour détecter à la fois un obstacle sous le plancher 12 et en avant du bord frontal inférieur 12a. Si au contraire, la nacelle élévatrice est équipée d'une plateforme de grande taille, il est possible d'ajouter plusieurs capteurs pour augmenter la zone de détection des obstacles. Plus généralement, il est possible de prévoir un ou plusieurs capteurs de proximité additionnels pour détecter des obstacles devant la face frontale 15 de la plate-forme 10 à un niveau supérieur que le bord frontal inférieur 12a, autrement dit pour détecter un obstacle devant le garde-corps 14, par exemple en avant du bord frontal supérieur 15a du garde-corps 14 et/ou à un niveau intermédiaire entre le bord frontal inférieur 12a et le bord frontal supérieur 15a. Dans ce cas, le ou les capteurs additionnels peuvent être montés sur la face frontale 15 du garde-corps 14.

L'électronique de bord de la nacelle élévatrice est prévue pour mettre automatiquement la nacelle élévatrice en position compacte de transport sur requête d'un opérateur en commandant la structure élévatrice en fonction des informations de détection fournies par le système de détection d'obstacle.

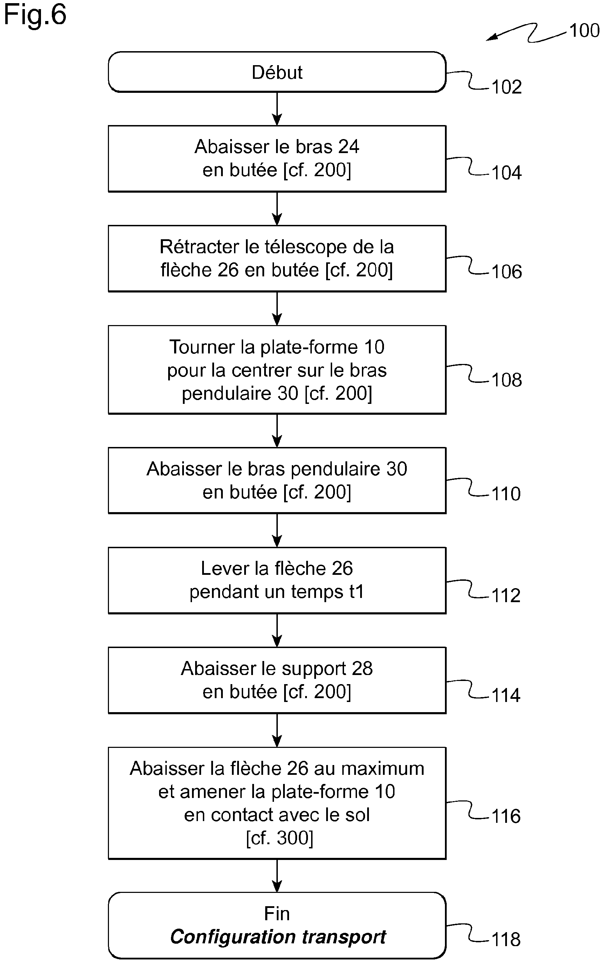

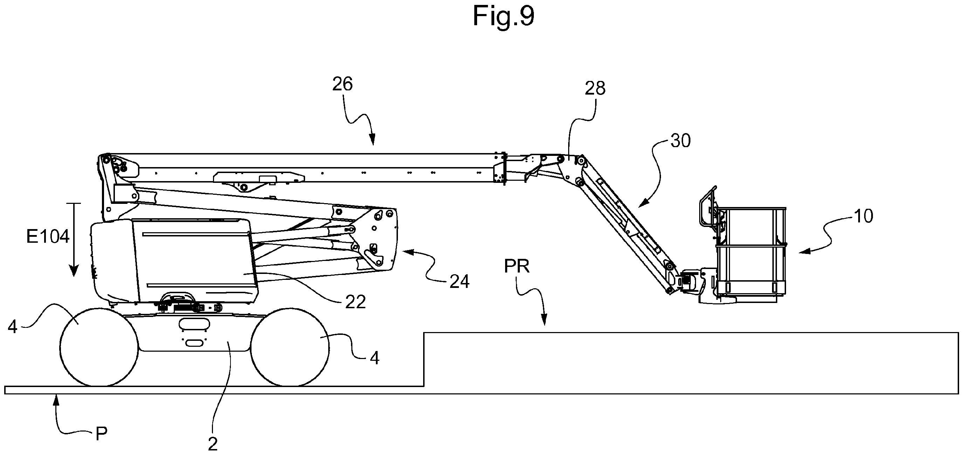

Les figures 6 à 8 illustrent le logigramme de commande mis en œuvre par l'électronique de bord suivant un mode de réalisation tandis que les figures 9 à 15 illustrent différentes configurations adoptées par la nacelle élévatrice lors de sa mise en œuvre pour un exemple de configuration de départ et un plateau P de remorque à col de cygne. Le plateau P de la remorque n'est représenté que schématiquement de manière très simplifiée.

Plus particulièrement, le logigramme 100 de la figure 6 est le logigramme général mis en œuvre tandis que les logigrammes 200 et 300 explicitent plus en détail les étapes mises en œuvre pour certaines étapes du logigramme 100.

Au départ - cf. case 102 -, la nacelle élévatrice, plus particulièrement sa structure élévatrice 20, peut être dans une configuration quelconque.

Il est préférable que préalablement à l'exécution du logigramme 100, l'électronique de bord vérifie l'absence de charge et/ou de personnes à bord de la plateforme 10. L'électronique de bord peut effectuer cette vérification sur la base des informations fournies par un système de mesure de charge présente sur la plate-forme 10 et/ou un système de détection d'attache d'un harnais pour personne(s) à bord de la plate-forme 10.

En l'absence de charge ou de personne détectée à bord de la plate-forme 10, l'électronique de bord exécute successivement l'étape 104 consistant à abaisser le bras articulé 24 jusqu'en butée, puis l'étape 106 consistant à rétracter la partie télescopique de la flèche 26 jusqu'en butée, puis l'étape 108 consistant à pivoter la plate-forme 10 pour la centrer par rapport au bras pendulaire 30, puis l'étape 110 consistant à abaisser le bras pendulaire 30 par rapport au support 28 jusqu'en butée.

Chacune de ces étapes est réalisée en exécutant la séquence du logigramme 200 dans lequel le mouvement X correspond à celui de l'étape concerné du logigramme 100.

Ainsi, pour réaliser l'une quelconque des étape 102 à 110, l'électronique de bord vérifie en temps réel si le système de détection d'obstacle détecte la proximité de la plate-forme 10 avec un obstacle : cf. étape 204. Si le système de détection d'obstacle ne détecte aucun obstacle à proximité de la plate-forme 10, l'électronique de bord actionne le mouvement concerné tant qu'il n'est pas en butée : cf. étapes 208 et 210. Lorsque le mouvement concerné arrive en butée, l'électronique de bord arrête l'actionneur correspondant au mouvement : cf. étape 212.

Si à l'étape 204, le système de détection d'obstacle détecte la proximité de la plate-forme 10 avec un obstacle, l'électronique de bord arrête de préférence le mouvement concerné et procède au levage de la flèche 26 de préférence pendant un temps prédéterminé t2 : cf. étape 206. Le levage de la flèche 26 a pour but d'éloigner la plate-forme 10 de l'obstacle. Le temps prédéterminé t2 est choisi de préférence de 2 à 3 secondes afin de limiter le levage de la flèche 26, étant précisé qu'une telle durée correspond à un angle de levage d'environ 2 à 3°. Puis l'électronique de bord vérifie à nouveau si la plate-forme 10 est suffisamment éloignée de l'obstacle par application de l'étape 204. Si tel est le cas, l'électronique de bord poursuit le mouvement concerné comme précédemment : cf. étapes 208, 210 et 212. Dans le cas contraire, l'électronique de bord lève encore le flèche 26 et repasse à nouveau à l'étape 204.

Une mise en œuvre des étapes 102 à 110 est illustrée par les figures 9 à 12.

La figure 9 illustre un exemple de configuration de départ de la nacelle élévatrice sur un plateau à col de cygne P représenté de manière schématique. La flèche E104 symbolise le premier mouvement à exécuter, à avoir celui de l'étape 104, autrement dit l'abaissement du bras articulé 24 en butée.

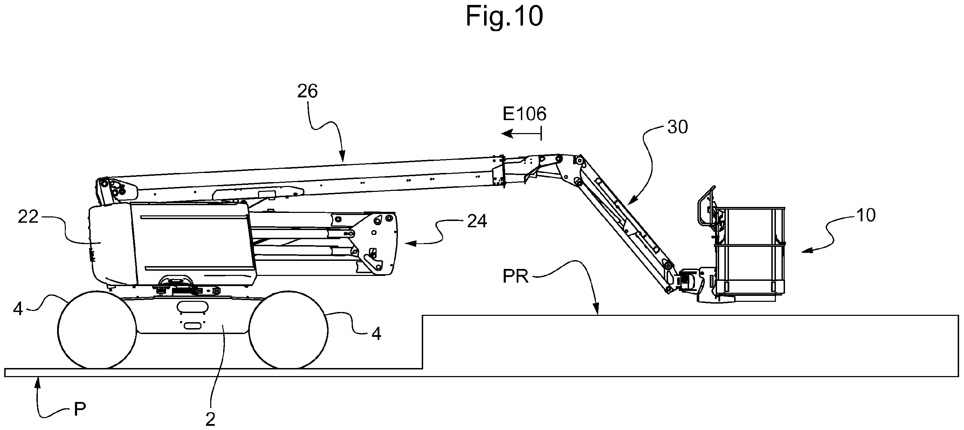

La figure 10 illustre la configuration de la nacelle élévatrice après exécution de l'étape 104. L'on remarquera que la flèche 26 a été un peu levée par rapport à la figure 9, ce qui est la conséquence de l'étape 206 du fait que le capteur 51 détectait la proximité de la partie relevée PR du plateau P lors de l'abaissement du bras articulé 24.

La flèche E106 symbolise le mouvement suivant à exécuter, à avoir celui de l'étape 106, autrement dit la rétractation de la partie télescopique de la flèche 26 en butée.

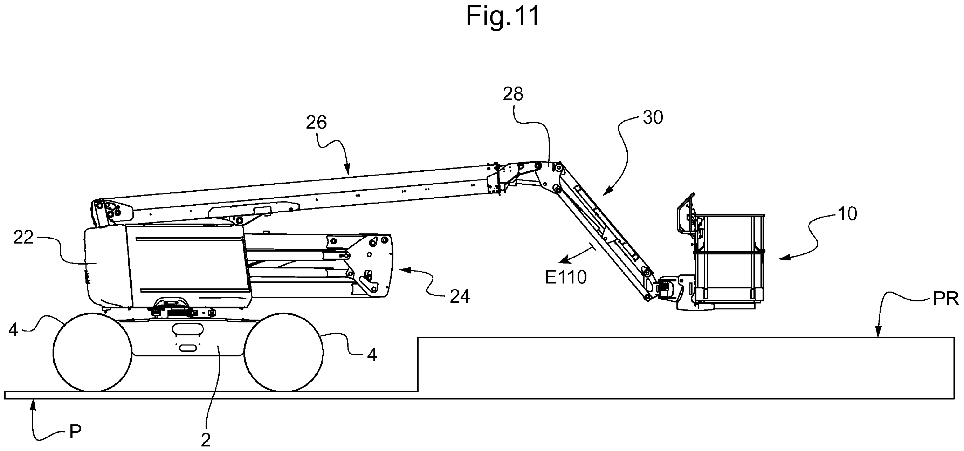

La figure 11 illustre la configuration de la nacelle élévatrice après exécution de l'étape 106. L'on remarquera à nouveau que la flèche 26 a été un peu levée par rapport à la figure 10, ce qui est à nouveau la conséquence de l'étape 206 du fait que le capteur 51 détectait la proximité de la partie relevée PR du plateau P lors de la rétractation de la partie télescopique de la flèche 26.

Ensuite, l'électronique de bord applique en principe l'étape 108 consistant à centrer la plate-forme 10 par rapport au bras pendulaire 30. En l'occurrence, la plateforme 10 était déjà centrée et donc l'électronique de bord poursuit avec l'étape 110. La flèche E110 sur la figure 11 symbolise ce prochain mouvement à effectuer, à savoir l'abaissement du bras pendulaire 30 en butée.

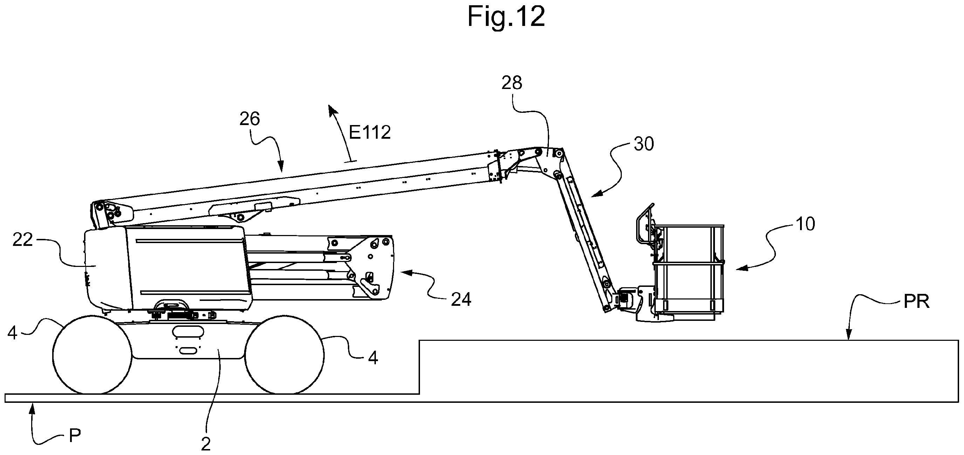

La figure 12 illustre la configuration de la nacelle élévatrice après exécution de l'étape 110. L'on remarquera que la flèche 26 a encore été un peu levée par rapport à la figure 11, ce qui est à nouveau la conséquence de l'étape 206 du fait que le capteur 51 détectait la proximité de la partie relevée PR du plateau P lors de l'abaissement du bras pendulaire 30 en butée.

Après l'étape 110, le processus de mise en position compacte se poursuit en basculant la plate-forme 10 sous la flèche 26 et en abaissant le plus possible la flèche 26 en tenant compte des obstacles éventuels, ce qui est l'objet des étapes 112 à 116. Pour cela, l'électronique de bord fait pivoter le support 28 du système de maintien à niveau de la plate-forme 10 de manière à replier le bras pendulaire 30 vers la flèche 26, ce qui a pour effet de sortir le plancher 12 de la plate-forme 10 de l'horizontale et l'incliner fortement vers le plateau P. L'électronique de bord contrôle le pivotement du support 2 en modifiant la répartition du fluide hydraulique entre les deux branches du circuit hydraulique reliant chacune des chambres respectives des vérins 41 et 42, ce qui modifie la longueur de sortie de la tige du vérin esclave 42 tandis que la longueur de sortie de la tige du vérin maître 41 reste inchangée du fait du vérin 40 qui maintient l'inclinaison de la flèche 26 par rapport au support de liaison 24c. Ces étapes sont définies pour prendre en compte le fait que le système de maintien à niveau maître/esclave de la plate-forme 10 a pour effet de faire systématiquement pivoter le support 28 lorsqu'un mouvement d'inclinaison de la flèche 26 est opéré.

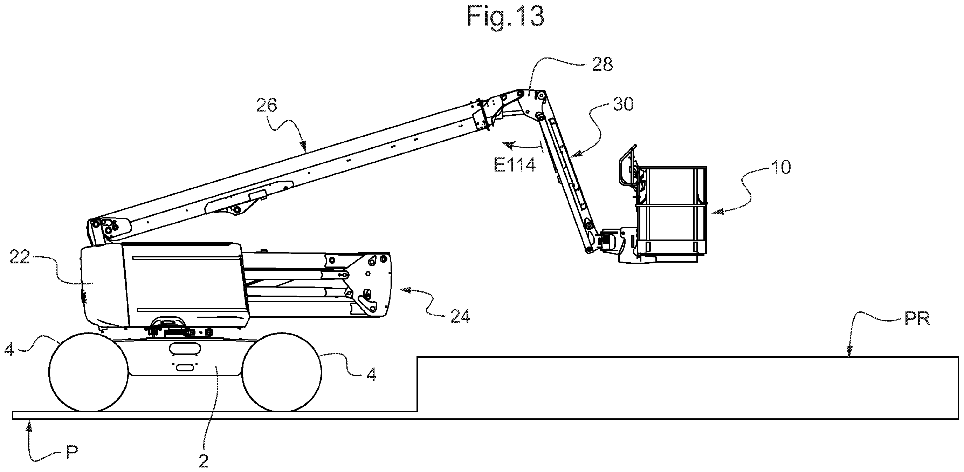

De manière plus précise, l'électronique de bord exécute d'abord l'étape 112 consistant à lever la flèche 26, de préférence pendant un temps prédéterminé t1. Le temps t1 est de préférence choisi entre 2 et 4 secondes, plus préférentiellement d'environ 3 secondes. Cela vise à fournir une hauteur libre sous la plate-forme 10 pour exécuter l'étape suivante sans percuter un obstacle à proximité ou du moins à en limiter la probabilité. Dans l'exemple illustré, la flèche E112 sur la figure 12 illustre le levage de la flèche 26 à réaliser en application de l'étape 112. La figure 13 illustre la configuration de la nacelle élévatrice après exécution de l'étape 112.

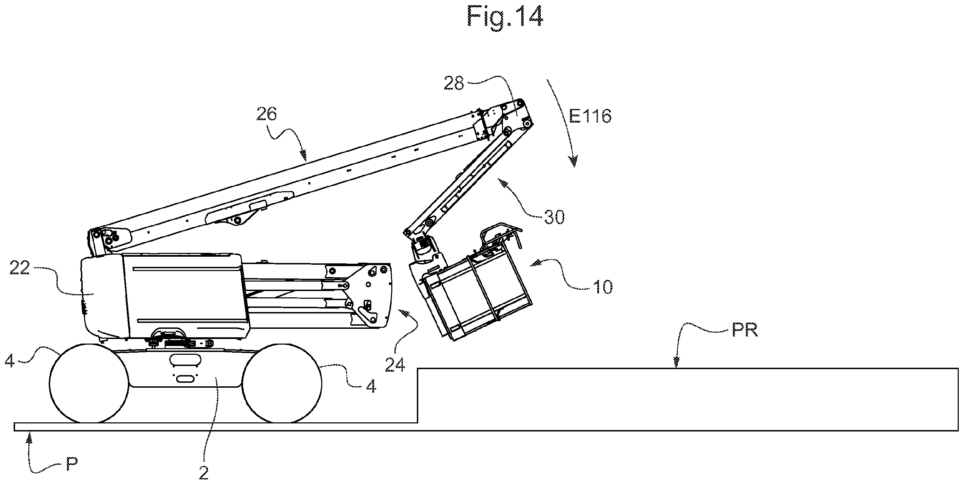

L'électronique de bord exécute ensuite l'étape 114 consistant à faire pivoter le support 28 en butée de manière que le bras pendulaire 30 soit placé vers la flèche 26, sous celle-ci. Cela a pour effet de forcer le système de maintien à niveau de la plateforme 10, le plancher 12 de la plate-forme 10 s'inclinant fortement par rapport à l'horizontale. La flèche E114 sur la figure 13 illustre le mouvement à réaliser en application de l'étape 114 tandis que la figure 14 illustre la configuration de la nacelle élévatrice après son exécution.

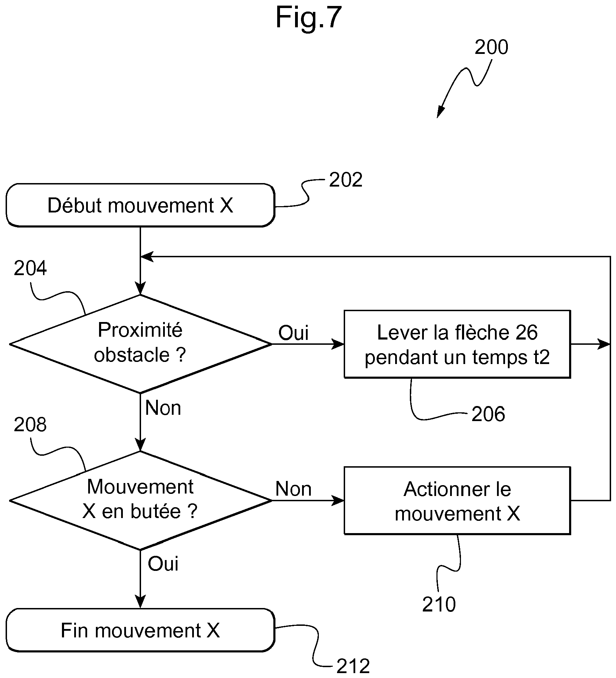

Lors de l'exécution de l'étape 114, l'électronique de bord met en œuvre le logigramme 200 de la figure 7, ce qui permet de gérer la présence d'un obstacle éventuel à proximité de la plate-forme 10 lors du pivotement du support 28. De ce fait, l'on comprendra que l'étape préalable 112 de levage de la flèche 26 peut être omise.

Après l'étape 114, l'électronique de bord exécute l'étape 116 qui vise en premier lieu à abaisser au maximum la flèche 26 en exploitant la possibilité maximale de relèvement de la plate-forme 10 sous la flèche 26 par pivotement du support 28 en butée dans la direction de repliement du bras pendulaire 30 vers la flèche 26, sous celle-ci. C'est en effet dans cette position de butée du support 28 que le niveau de la plate-forme 10 est le plus haut sous la flèche 26, ce qui permet de maximiser l'abaissement de la flèche 26. L'étape 116 vise aussi à mettre en contact le bord frontal inférieur 12a de la plate-forme 10 en contact avec le sol. L'étape 116 est mise en œuvre en tenant compte à la fois de la présence éventuelle d'un obstacle à proximité de la plate-forme 10 et du fait que le système de maintien à niveau maître/esclave de la plate-forme 10 fait pivoter le support 28 en même temps que l'inclinaison de la flèche 26 est modifié sans que le vérin esclave 42 soit commandé par l'électronique de bord.

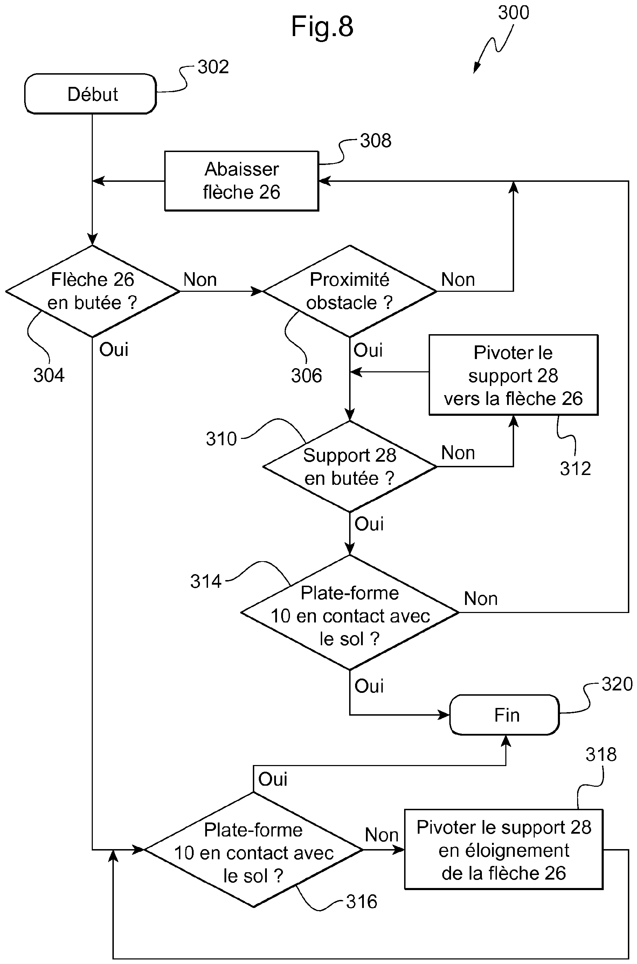

Le détail de l'exécution de l'étape 116 par l'électronique de bord est illustré par le logigramme 300 de la figure 8.

Il débute par la boîte 302 et l'électronique de bord commence par exécuter l'étape 304 de vérification si la flèche 26 est en butée basse.

Si tel est le cas, l'électronique de bord passe à l'étape 316 de vérification consistant à déterminer si le bord frontal inférieur 12a de la plate-forme 10 est en contact avec le sol ou un objet quelconque posé sous la plate-forme 10 sur la base du système de détection d'obstacle, en l'occurrence le signal du capteur 52. Si tel est le cas, cela signifie que la nacelle élévatrice est déjà en position compacte de transport : l'électronique de bord est alors arrivé à la fin du logigramme 300 - cf. boîte 320 - et à la fin du logigramme 100 : cf. boîte 118. Dans le cas contraire, l'électronique de bord exécute l'étape 318 consistant à faire pivoter le support 28 de manière à abaisser le bras pendulaire 30, et donc la plate-forme 10, vers le sol et boucle sur l'étape 316 tant que le système de détection d'obstacle n'a pas déterminé que le bord frontal inférieur 12a de la plate-forme 10 est arrivé en contact avec le sol ou un objet posé sur celui-ci.

Si à l'étape 304, l'électronique de bord détermine que la flèche 26 n'est pas en butée, elle passe à l'exécution de l'étape 306 de vérification de la présence d'un obstacle à proximité de la plate-forme 10 grâce au système de détection d'obstacle. En l'absence de détection d'obstacle à proximité à l'étape 304, l'électronique de bord abaisse la flèche 26 par application de l'étape 308 et repasse à l'étape de vérification 304. Dans le cas contraire, l'électronique de bord stoppe l'abaissement de la flèche 26 (non représenté dans le logigramme 300) et vérifie si le support 28 est en butée dans la direction de repliement du bras pendulaire 30 sous la flèche 26. Si ce n'est pas le cas, elle fait pivoter le support 28 pour replier le bras pendulaire 30 vers la flèche 26 - cf. étape 312 - en repassant à l'étape de vérification 310 de sorte à amener le support 28 en butée dans la direction de repliement du bras pendulaire 30 sous la flèche 26. La boucle des étapes 310 et 312 a pour effet de relever la partie la plus basse de la plateforme 10, étant rappelé que l'abaissement de la flèche 26 fait sortir le support 28 de sa butée et abaisse donc le niveau de la plate-forme 10 en raison du système de maintien à niveau maître/esclave de la plate-forme 10.

Si à l'étape de vérification 310, il apparait que le support 28 est en butée dans la direction de repliement du bras pendulaire 30 sous la flèche 26, l'électronique de bord vérifie à l'étape 314 si le bord frontal inférieur 12a de la plate-forme 10 est en contact avec le sol ou un objet quelconque sous la plate-forme 10 sur la base des informations fournies par le système de détection d'obstacle, en l'occurrence le capteur 52. Si ce n'est pas le cas, l'électronique de bord repasse à l'étape 308 pour poursuivre l'abaissement de la flèche. Dans le cas contraire, cela signifie que la nacelle élévatrice est maintenant en position compacte de transport : l'électronique de bord a fini d'exécuter le logigramme 300 - cf. boîte 320 - et le logigramme 100 : cf. boîte 118.

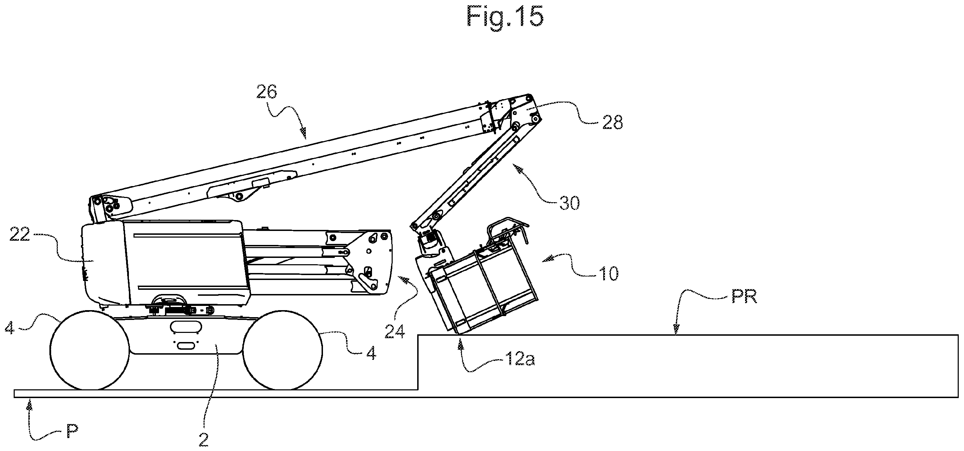

Par application du logigramme 300, la nacelle élévatrice dans notre exemple illustratif aboutit à la position compacte de transport telle que représentée à la figure 15.

Pour la mise en œuvre des logigrammes 100, 200, 300, la nacelle élévatrice est pourvue de capteurs de fin de course respectifs pour détecter l'arrivée en butée de chaque mouvement concerné ou alternativement par détection du dépassement d'un seuil de pression dans le circuit hydraulique qui est indicatif de l'arrivée en butée du mouvement concerné. Similairement, l'électronique de bord peut déterminer si la plateforme 10 est décentrée par rapport au bras pendulaire 30 grâce à un capteur d'angle ou de deux capteurs indicatifs du décentrage vers un côté respectif.

Dans l'exécution des logigrammes 100, 200 et 300, l'électronique de bord est préférentiellement prévue pour considérer que la plate-forme 10 est à proximité d'un obstacle si le système de détection d'obstacle détermine qu'il se trouve à une distance inférieure ou égale à un seuil de distance prédéterminé qui est choisi suffisant pour stopper le mouvement en cours de la structure élévatrice 20 sans risque de heurter l'obstacle sous l'effet inertiel. En général, un seuil de 10 cm est approprié de ce point de vue.

Comme mentionné, la détection du contact du bord avant inférieur 12a de la plateforme avec le sol est faite sur la base des signaux du capteur de proximité 52. En variante, elle peut être opérée au moyen d'un dispositif distinct, par exemple par un dispositif de détection de pression exercée sur un tube souple agencé le long du bord frontal inférieur 12a de la plate-forme 10 ou alternativement par détection du dépassement d'un seuil de pression dans le circuit hydraulique.

L'on remarquera que les logigrammes 100, 200, 300 n'assurent pas une orientation particulière de la tourelle 22 par rapport au châssis 2. En effet, il est préférable de ne pas imposer automatiquement une orientation particulière de celle-ci et permettre à l'opérateur de l'orienter lui-même en fonction des objets déjà présents sur la remorque ou le camion-plateau.

L'on remarquera aussi que l'ordre des étapes 104 à 110 peut être modifié.

Bien entendu, si le système de maintien à niveau de la plate-forme 10 n'est pas du type maître/esclave fonctionnant de façon indépendante de l'électronique de bord, le logigramme 300 peut être adapté et simplifié.

Par ailleurs, pour amener le bord frontal inférieur 12a de la plate-forme 10 au contact du sol dans le cas où la flèche 26 est déjà abaissée en butée basse, il est possible d'agir alternativement ou complémentairement au pivotement du support 28, sur l'inclinaison du bras pendulaire 30 par rapport au support 28 dans le sens de son relèvement.

Dans le mode de réalisation exemplifié, la conception de la structure élévatrice 20 eu égard à ses possibilités de mouvements exclut toute possibilité d'interférence de la plate-forme 10 avec une autre partie de la nacelle élévatrice. De ce fait, les logigrammes 100, 200, 300 n'ont pas à gérer un tel risque d'interférence. Si tel n'était pas le cas, les logigrammes 100, 200, 300 sont adaptés pour éviter une telle interférence sur la base du système de détection d'obstacle. Le système de détection d'obstacle est le cas échéant adapté pour pouvoir détecter la proximité de la plate-forme 10 avec les autres parties concernées de la nacelle élévatrice au besoin en le complétant avec un ou plusieurs capteurs de proximité supplémentaires.

Par ailleurs, les logigrammes 100, 200, 300 peuvent bien entendu être adaptés à des nacelles élévatrices différentes dès lors qu'elles ont une flèche inclinable sur un châssis et un bras pendulaire pivotant au bout de la flèche qui maintient une plate-forme de travail. On peut les adapter notamment à des nacelles élévatrices sans bras articulé 24, ou ayant une flèche 26 non télescopique, ou encore ne permettant pas à la plateforme 10 de pivoter par rapport au bras pendulaire 30. Bien entendu, les logigrammes 100, 200, 300 peuvent être appliqués aussi au cas de nacelles élévatrices sans tourelle puisque celle-ci n'intervient pas dans les logigrammes.

L'on remarquera que dans ce mode de réalisation de la mise en position compacte de transport, l'inclinaison de la flèche 26 sert de variable d'ajustement pour éviter les obstacles à proximité de la plate-forme 10 lors des différents mouvements. Une raison pour ce choix est qu'il est préférable que le bras articulé 24 soit entièrement replié pour augmenter la rigidité et la résistance de la structure élévatrice 20 face aux secousses du transport.

L'électronique de bord peut aussi être prévu pour amener automatiquement la nacelle élévatrice, sur requête d'un opérateur, dans une position repliée prête à l'utilisation depuis la position compacte de transport dans laquelle l'électronique de bord l'a automatiquement amené précédemment.

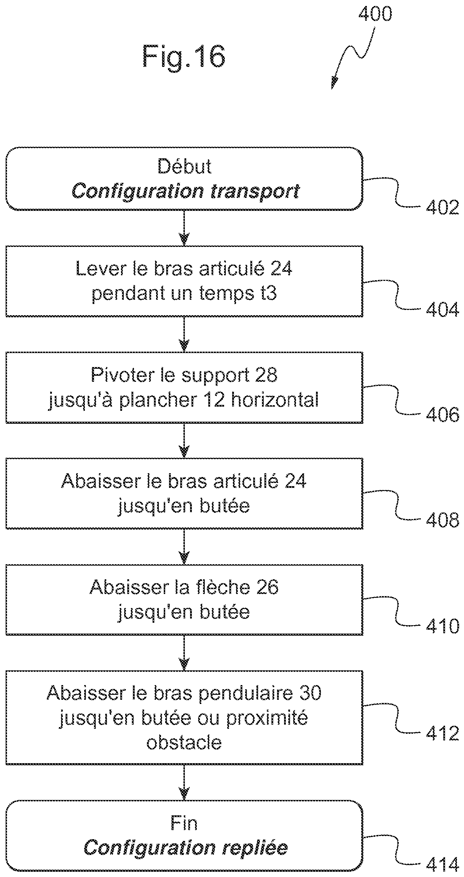

Pour la nacelle élévatrice du mode de réalisation décrit jusqu'à présent, cette possibilité peut être mise en œuvre par l'électronique de bord en exécutant le logigramme 400 de la figure 16.

A partir de la position compacte de transport - cf. boîte 402 -, l'électronique de bord exécute l'étape 404 consistant à lever le bras articulé 24 de préférence pendant un temps prédéterminé t3. Ce temps prédéterminé t3 est choisi pour assurer une garde au sol sous la plate-forme 10 qui permette ensuite de pivoter le support 28 pour amener le plancher 12 de la plate-forme 10 à l'horizontale, ce qui est l'objet de l'étape suivante 406. A cette fin, le temps t3 est de préférence de l'ordre de 3 secondes. Lors de l'exécution de l'étape 406, l'électronique de bord peut déterminer que le plancher 12 est parvenu en position horizontal sur la base des informations fournies par un dispositif de détermination de l'inclinaison du plancher 12 qui peut être de tout type approprié connu en soi.

Après l'étape 406, l'électronique de bord exécute l'étape 408 consistant à abaisser le bras articulé 24 jusqu'en butée basse. Puis, l'électronique de bord exécute l'étape 410 consistant à abaisser la flèche 26 jusqu'en butée basse.

Lors de l'exécution des mouvements des étapes 408 et 410, l'électronique de bord vérifie en temps réel si le système de détection d'obstacle détecte la proximité de la plate-forme 10 avec un obstacle. Si tel n'est pas le cas, l'électronique de bord poursuit le mouvement concerné jusqu'en butée. Au contraire, si le système de détection d'obstacle détecte la proximité de la plate-forme 10 avec un obstacle, l'électronique de bord arrête de préférence le mouvement concerné, lève le bras pendulaire 30 pour éviter l'obstacle et reprend ensuite le mouvement. Autrement dit, l'électronique de bord applique un algorithme similaire à celui du logigramme 200 de la figure 7, mais en levant le bras pendulaire 30 au lieu de la flèche 26 à l'étape 206.

Enfin, l'électronique de bord exécute l'étape 412 consistant à abaisser le bras pendulaire 30 jusqu'à la détection de la proximité d'un obstacle - à savoir en principe le sol - sur la base des informations fournies par le système de détection d'obstacle, en particulier le capteur 51, ou à défaut jusqu'en butée basse.

Le processus de placement automatique de la nacelle élévatrice en position repliée prête à l'utilisation est alors fini : cf. boîte 414. La nacelle élévatrice est alors dans une configuration repliée prête à l'utilisation, la plate-forme 10 étant horizontale et proche du sol pour permettre l'accès à bord de personnes, tel que par exemple illustré à la figure 1.

L'on remarquera que dans ce mode de réalisation de la mise en position repliée prête à l'utilisation, l'inclinaison du bras pendulaire 30 sert de variable d'ajustement pour éviter les obstacles à proximité de la plate-forme 10. La raison en est que pour déplacer la nacelle élévatrice au sol à sa vitesse maximale, il est préférable que le bras articulé 24 et la flèche 26 soient tous les deux en butée basse pour limiter les oscillations appliquées à la plate-forme 10. Aussi, pour rejoindre une zone de travail, les opérateurs lèvent généralement uniquement le bras pendulaire 30, ce qui permet d'améliorer la visibilité depuis la plate-forme 10 vers l'avant de la nacelle élévatrice, c'est-à-dire dans la direction de déplacement avant de celle-ci, qui va en l'occurrence de la droite vers la gauche sur la figure 1.

Une interface homme/machine est prévue pour permettre à l'opérateur de requérir le placement automatique de la nacelle élévatrice en position compacte de transport ou le placement automatique en position repliée prête à l'utilisation à partir de cette dernière. L'interface est prévue pour recevoir une commande correspondante de l'opérateur pour requérir chacun. Ces commandes peuvent être rendues accessibles de différentes manières : sur un poste de commande auxiliaire agencé sur le châssis 2 ou la tourelle 22 pour être accessible depuis le sol et équipé par ailleurs d'autres organes de commandes dédiés à la commande manuelle des différents mouvements de la structure élévatrice 20, ou bien sur un poste distinct agencé sur le châssis 2 ou la tourelle pour être accessible depuis le sol. Il peut aussi s'agir d'une télécommande. Le poste de commande peut comprendre un écran graphique soit tactile, soit muni de boutons de fonctions génériques telles que le déplacement sur l'écran, la validation et l'annulation. Le poste de commande peut notamment consister en un terminal mobile doté d'un écran et exécutant une application dédiée, notamment un téléphone intelligent, autrement dit *smartphone.*

Dans le cas d'un écran graphique, les commandes pour la fonction de mise en position compacte de transport s'affichent de préférence sur une page dédiée qui est sélectionnée par l'utilisateur, étant donné qu'il ne s'agit pas de la fonction principale de la nacelle élévatrice. L'affichage par défaut peut comporter des informations génériques telles que horamètre, heure, niveau de carburant, alertes de sécurité...

Si l'utilisateur coupe l'alimentation de la nacelle élévatrice après placement automatique en position compacte de transport, il est avantageux que le menu de mise en position repliée prête à l'utilisation s'affiche en premier lorsque la nacelle élévatrice est à nouveau mise sous tension pour permettre à l'utilisateur de l'ordonner sans attendre.

L'écran peut avantageusement afficher un bargraphe qui représente en temps réel l'avancement de la manœuvre automatique aussi bien du placement automatique en position compacte de transport que du placement automatique en position repliée prête à l'utilisation. A la fin de la séquence de mise en position compacte de transport, il est avantageux de faire afficher sur l'écran graphique des consignes pour sécuriser la nacelle élévatrice pendant le transport : engager un dispositif de blocage de la couronne de la tourelle 22 pour éviter qu'elle ne casse ou qu'elle ne tourne pendant le transport, chaîner la nacelle élévatrice sur la remorque, etc.

Avantageusement, la structure élévatrice 20 de la nacelle élévatrice peut être équipée d'une caméra dont le signal vidéo est affiché sur une partie de l'écran graphique. Ainsi, l'utilisateur peut contrôler le bon déroulement de la manœuvre automatique de mise en position compacte de transport et l'interrompre si nécessaire.

Pour des raisons de sécurité, il est préférable que la commande pour ordonner le placement automatique dans la position compacte de transport ou dans la position repliée prête à l'utilisation - ou éventuellement un autre organe dédié - doive être maintenue actionnée par l'opérateur pendant toute la durée d'exécution du processus automatique correspondant et qu'en cas de relâchement de la commande ou de l'organe dédié, l'électronique de bord suspende immédiatement le processus automatique tant que la commande ou l'organe dédié n'est pas à nouveau actionné. Cette caractéristique a en outre l'avantage de permettre à l'opérateur d'intervenir sur les opérations en cours en actionnant manuellement des mouvements de la structure élévatrice 20.

## Revendications

1. Nacelle élévatrice susceptible d'être transportée sur remorque ou camion-plateau, comprenant :
- un châssis (2) muni d'organes de translation au sol (4),
- une plate-forme de travail (10) comprenant un plancher (12) et un garde-corps (14),
- une structure élévatrice (20) agencée sur le châssis (2) et comprenant :
∘ une flèche (26) apte à être levée et abaissée par modification de son inclinaison par rapport au châssis (2),
∘ un bras pendulaire (30) monté par une première extrémité à l'extrémité supérieure de la flèche (26) de manière à pouvoir être levé et abaissé par rapport à la flèche (26) par pivotement, le bras pendulaire (30) supportant la plate-forme (10) à une deuxième extrémité qui est du côté opposé à sa première extrémité,
- un système de détection d'obstacle (51, 52) pour détecter la proximité de la plate-forme (10) avec un obstacle,
**caractérisée en ce que** la nacelle élévatrice comprend en outre une électronique de bord prévue pour mettre automatiquement la nacelle élévatrice en position compacte sur requête d'un opérateur, l'électronique de bord étant prévue pour commander la structure élévatrice (20) en fonction des informations de détection fournies par le système de détection d'obstacle (51, 52) de manière à amener automatiquement la nacelle élévatrice, en tenant compte de l'environnement de la nacelle élévatrice, dans une position compacte dans laquelle la nacelle élévatrice est apte au transport sur remorque ou camion-plateau.

2. Nacelle élévatrice selon la revendication 1, dans laquelle le système de détection d'obstacle comprend au moins un capteur de proximité (51, 52), de préférence deux, pour détecter la proximité aussi bien d'un obstacle sous le plancher (12) de la plateforme (10) qu'un obstacle devant le côté frontal (15) de la plate-forme (10) qui est à l'opposé du bras pendulaire (30).

3. Nacelle élévatrice selon la revendication 1 ou 2, dans laquelle l'électronique de bord est prévue pour commander la structure élévatrice (20) de manière que dans la position compacte, le bras pendulaire (30) soit replié sous la flèche (26) et le plancher (12) de la plate-forme (10) soit incliné par rapport à l'horizontale de manière que le bord frontal inférieur (12a) de la plate-forme (10) soit dirigé vers le sol et en contact avec celui-ci, l'électronique de bord étant prévue pour amener le bord frontal du plancher en contact avec le sol en maximisant l'abaissement de l'extrémité supérieure de la flèche (26).

4. Nacelle élévatrice selon l'une quelconque des revendications 1 à 3, dans laquelle :
- la flèche (26) est télescopique, l'électronique de bord étant prévue pour commander la structure élévatrice pour que, dans la position compacte, la flèche (26) soit complètement rétractée, et/ou
- la plate-forme (10) est apte à être pivotée autour d'un axe vertical par rapport au bras pendulaire (30), l'électronique de bord étant prévue pour commander la structure élévatrice pour que, dans la position compacte, la plate-forme (10) soit centrée par rapport au bras pendulaire (30), et/ou
- la flèche (26) est montée sur le châssis (2) par le biais d'un bras articulé (24) supportant à son extrémité supérieure la flèche, dans laquelle :
∘ la flèche (26) est apte à être levée et abaissée par modification de son inclinaison par rapport au bras articulé (24), et
∘ l'extrémité supérieure du bras articulé (24) est apte à être levée et abaissée verticalement par dépliement et repliement respectivement du bras articulé,
l'électronique de bord étant prévue pour commander la structure élévatrice pour que, dans la position compacte, le bras articulé (24) soit complètement abaissé.

5. Nacelle élévatrice selon l'une quelconque des revendications 1 à 4, dans laquelle lors de la mise en position compacte, l'électronique de bord est prévue pour commander la structure élévatrice (20) de manière à élever l'extrémité supérieure de la flèche (26) en cas de détection d'un obstacle à proximité de la plate-forme (10) par le système de détection d'obstacle (51, 52).

6. Nacelle élévatrice selon l'une quelconque des revendications 1 à 5, dans laquelle lors de la mise en position compacte, l'électronique de bord est prévue pour lever la flèche (26) en cas de détection d'un obstacle à proximité de la plate-forme (10) par le système de détection d'obstacle (51, 52).

7. Nacelle élévatrice selon la revendication 6, dans laquelle l'électronique de bord est prévue pour lever la flèche (26) pendant une durée prédéterminée (t2) en cas de détection d'un obstacle.

8. Nacelle élévatrice selon la revendication 6 ou 7, dans laquelle l'électronique de bord est en outre prévue pour arrêter le ou les mouvement(s) de la structure élévatrice (20) en cours lorsqu'un obstacle est détecté à proximité de la plate-forme (10), puis continuer le ou les mouvement(s) en cours après avoir levé la flèche (26) si le système de détection d'obstacle (51, 52) a cessé de détecter un obstacle à proximité de la plate-forme (10).

9. Nacelle élévatrice selon l'une quelconque des revendications 1 à 8, dans laquelle :
- le bras pendulaire (30) est monté à l'extrémité supérieure de la flèche (26) par le biais d'un support (28), le bras pendulaire (30) étant monté par sa première extrémité sur le support (28) de manière à pouvoir être levé et abaissé par pivotement par rapport au support (28) et le support (28) étant monté pivotant autour d'un axe horizontal à l'extrémité supérieure de la flèche (26), le support (28) faisant partie d'un système de maintien à niveau de la plate-forme (41, 42) pour maintenir sensiblement horizontal le plancher (12) de la plateforme (10) par pivotement du support (28) en cas de modification de l'inclinaison de la flèche (26) par rapport au châssis (2) lorsque la nacelle élévatrice est en utilisation,
- l'électronique de bord est prévue pour pouvoir commander le pivotement du support (28) du système de maintien à niveau de la plate-forme ;
- le système de maintien à niveau de la plate-forme (41, 42) est prévu pour faire pivoter le support (28) en corrélation avec la modification de l'inclinaison de la flèche (26) de manière autonome par rapport à la commande du pivotement du support (28) par l'électronique de bord, et
- l'électronique de bord est prévue pour amener automatiquement la nacelle élévatrice dans la position compacte en deux phases successives :
∘ une première phase dans laquelle l'électronique de bord commande la structure élévatrice (20) de manière à aboutir à la fin de la première phase à ce que la structure élévatrice (20) soit dans une configuration correspondant à la position compacte de la nacelle élévatrice, sauf en ce qui concerne l'angle d'inclinaison de la flèche (26) et éventuellement l'angle de pivotement du support (28) du système de maintien à niveau de la plate-forme (10) et en ce que le bord frontal inférieur (12a) de la plate-forme (10) est hors contact avec le sol, et
∘ une deuxième phase dans laquelle l'électronique de bord commande l'inclinaison de la flèche (26), le pivotement du support (28) du système de maintien à niveau de la plate-forme et éventuellement le levage du bras pendulaire (30) par rapport au support de manière à aboutir à la fin de la deuxième phase à la position compacte de la nacelle élévatrice, dans laquelle :
- à la fin de la première phase, l'angle de pivotement du support (28) du système de maintien à niveau de la plate-forme est tel que le bras pendulaire (30) est replié sous la flèche (26), et
- lors de la deuxième phase, l'électronique de bord est prévue pour appliquer une séquence consistant à :
∘ i) abaisser la flèche (26), et
∘ ii) en cas de détection d'un obstacle à proximité de la plate-forme (10) par le système de détection d'obstacle (51, 52), arrêter d'abaisser la flèche (26) et faire pivoter le support (28) du système de maintien à niveau de la plate-forme pour replier le bras pendulaire (30) vers la flèche (26), puis continuer à abaisser la flèche (26) si la détection de la proximité d'obstacle a cessé,
et dans le cas où la flèche (26) a été abaissée jusqu'en butée basse lors de ladite séquence, l'électronique de bord applique une séquence supplémentaire pour amener le bord frontal inférieur (12a) de la plate-forme (10) en contact avec le sol en faisant pivoter le support (28) du système de maintien à niveau de la plateforme de manière à éloigner le bras pendulaire (30) de la flèche (26) et/ou en faisant lever le bras pendulaire (30) par rapport au support (28) du système de maintien à niveau de la plate-forme.

10. Nacelle élévatrice selon la revendication 9, dans laquelle :
- la conception de la structure élévatrice eu égard à ses possibilités de mouvement exclut toute possibilité d'interférence de la plate-forme (10) avec une autre partie de la nacelle élévatrice, et
- l'électronique de bord est prévue pour que lorsqu'elle fait pivoter le support (28) du système de maintien à niveau de la plate-forme dans l'étape (ii) de ladite séquence de la deuxième phase, elle le fasse pivoter jusqu'en butée, et/ou l'électronique de bord est prévue pour faire pivoter le support (28) du système de maintien à niveau de la plate-forme de manière à être en butée à la fin de la première phase.

11. Nacelle élévatrice selon la revendication 9 ou 10, dans laquelle les caractéristiques de l'une quelconque des revendications 5 à 8 sont mises en œuvre durant l'exécution de la première phase par l'électronique de bord.

12. Nacelle élévatrice selon l'une quelconque des revendications 1 à 11, dans laquelle l'électronique de bord est prévue pour vérifier l'absence de charge et/ou de personne à bord de la plate-forme (10) avant d'amener automatiquement la nacelle élévatrice dans la position compacte, de préférence en coopérant avec un système de mesure de charge présente sur la plate-forme et/ou un système de détection d'attache d'un harnais pour personne(s) à bord de la plate-forme.

13. Nacelle élévatrice selon l'une quelconque des revendications 1 à 12, dans laquelle l'électronique de bord est en outre prévue pour mettre automatiquement la nacelle élévatrice en position d'accès à la plate-forme (10) à partir de la position compacte dans laquelle la nacelle élévatrice a été préalablement mise de manière automatique par l'électronique de bord, dans laquelle position d'accès le plancher (12) de la plate-forme (10) est sensiblement horizontal et à une distance du sol permettant à un opérateur au sol d'accéder sur la plate-forme (10).

14. Nacelle élévatrice selon la revendication 13, dans laquelle lors de la mise en position d'accès de la nacelle élévatrice, l'électronique de bord est prévue pour appliquer automatiquement une séquence comprenant les étapes successives suivantes :
a) élever l'extrémité supérieure de la flèche (26), de préférence par levage pendant un temps prédéterminé du bras articulé (24) ou, à défaut, de la flèche (26);
b) faire pivoter le support (28) du système de maintien à niveau de la plateforme (41, 42) jusqu'à ce que le plancher (12) de la plate-forme (10) soit sensiblement horizontal en coopérant avec un dispositif de détermination de l'horizontalité du plancher (12) ;
c) abaisser complètement la flèche (26) et le cas échéant le bras articulé (24) ;
d) abaisser le bras pendulaire (30) par rapport à la flèche (26) en position d'abaissement maximale ou à un niveau d'abaissement compatible avec l'environnement pour éviter une interférence de la plate-forme (10) avec l'environnement lequel niveau d'abaissement est déterminé en fonction des informations de détection fournies par le système de détection d'obstacle (51, 52).

## Patentansprüche

1. Hubarbeitsbühne, die auf einem Anhänger oder Pritschenwagen transportiert werden kann, umfassend:
- ein Chassis (2), das mit Bodenverschiebeorganen (4) versehen ist,
- eine Arbeitsplattform (10), umfassend einen Boden (12) und ein Geländer (14),
- eine Hebestruktur (20), die auf dem Chassis (2) angeordnet ist und umfasst:
∘ einen Ausleger (26), der durch Veränderung seiner Neigung in Bezug auf das Fahrgestell (2) gehoben und gesenkt werden kann,
∘ einen Pendelarm (30), der mit einem ersten Ende am oberen Ende des Auslegers (26) angebracht ist, so dass er in Bezug auf den Ausleger (26) durch Schwenken angehoben und abgesenkt werden kann, wobei der Pendelarm (30) die Plattform (10) an einem zweiten Ende trägt, das sich auf der seinem ersten Ende gegenüberliegenden Seite befindet,
- ein Hinderniserkennungssystem (51, 52) zum Erkennen der Nähe der Plattform (10) zu einem Hindernis,
**dadurch gekennzeichnet, dass** die Hubarbeitsbühne ferner eine Bordelektronik umfasst, die dazu vorgesehen ist, die Hubarbeitsbühne auf Anforderung eines Bedieners automatisch in eine kompakte Position zu bringen, wobei die Bordelektronik dazu vorgesehen ist, die Hebestruktur (20) auf der Grundlage der Erfassungsinformationen von dem Hinderniserfassungssystem (51, 52) zu steuern, um die Hubarbeitsbühne unter Berücksichtigung der Umgebung der Hubarbeitsbühne automatisch in eine kompakte Position zu bringen, in der die Hubarbeitsbühne für den Transport auf einem Anhänger oder Pritschenwagen geeignet ist.

2. Hubarbeitsbühne nach Anspruch 1, bei welcher das Hinderniserkennungssystem mindestens einen, vorzugsweise zwei Näherungssensor(en) (51, 52) umfasst, um die Nähe sowohl eines Hindernisses unter dem Boden (12) der Plattform (10) als auch eines Hindernisses vor der Vorderseite (15) der Plattform (10), die dem Pendelarm (30) gegenüberliegt, zu erkennen.

3. Hubarbeitsbühne nach Anspruch 1 oder 2, bei welcher die Bordelektronik dazu vorgesehen ist, die Hebestruktur (20) so zu steuern, dass in der kompakten Position, der Pendelarm (30) unter den Ausleger (26) gefaltet ist und der Boden (12) der Plattform (10) gegenüber der Horizontalen so geneigt ist, dass die untere Vorderkante (12a) der Plattform (10) zum Boden hin gerichtet ist und diesen berührt, wobei die Bordelektronik dazu vorgesehen ist, die Vorderkante des Bodens der Plattform in Kontakt mit dem Boden zu bringen, indem das Absenken des oberen Endes des Auslegers (26) maximiert wird.

4. Hubarbeitsbühne nach einem der Ansprüche 1 bis 3, bei welcher:
- der Ausleger (26) teleskopierbar ist, wobei die Bordelektronik dazu vorgesehen ist, die Hubarbeitsbühne so zu steuern, dass in der kompakten Position der Ausleger (26) vollständig eingefahren ist, und/oder
- die Plattform (10) um eine vertikale Achse in Bezug auf den Pendelarm (30) schwenkbar ist, wobei die Bordelektronik dazu vorgesehen ist, die Hebestruktur so zu steuern, dass die Plattform (10) in der kompakten Position in Bezug auf den Pendelarm (30) zentriert ist, und/oder
- der Ausleger (26) über einen Gelenkarm (24), der an seinem oberen Ende den Ausleger trägt, an dem Rahmen (2) angebracht ist, wobei:
∘ der Ausleger (26) durch Änderung seiner Neigung in Bezug auf den Gelenkarm (24) angehoben und abgesenkt werden kann, und
∘ das obere Ende des Gelenkarms (24) geeignet ist, durch Entfalten bzw. Zusammenfalten des Gelenkarms vertikal angehoben und abgesenkt zu werden,
wobei die Bordelektronik dazu vorgesehen ist, die Hebestruktur so zu steuern, dass in der kompakten Position der Gelenkarm (24) vollständig abgesenkt ist.

5. Hubarbeitsbühne nach einem der Ansprüche 1 bis 4, bei welcher beim Einnehmen der kompakten Position die Bordelektronik dazu vorgesehen ist, die Hebestruktur (20) so zu steuern, dass das obere Ende des Auslegers (26) angehoben wird, wenn das Hinderniserkennungssystem (51, 52) ein Hindernis in der Nähe der Plattform (10) erkennt.

6. Hubarbeitsbühne nach einem der Ansprüche 1 bis 5, bei welcher beim Einnehmen der kompakten Position die Bordelektronik dazu vorgesehen ist, den Ausleger (26) anzuheben, wenn das Hinderniserkennungssystem (51, 52) ein Hindernis in der Nähe der Plattform (10) erkennt.

7. Hubarbeitsbühne nach Anspruch 6, bei welcher die Bordelektronik dazu vorgesehen ist, den Ausleger (26) für eine vorbestimmte Zeit (t2) anzuheben, wenn ein Hindernis erkannt wird.

8. Hubarbeitsbühne nach Anspruch 6 oder 7, bei welcher die Bordelektronik ferner dazu vorgesehen ist, die laufende(n) Bewegung(en) der Hebestruktur (20) anzuhalten, wenn ein Hindernis in der Nähe der Plattform (10) erkannt wird, und anschließend die laufende(n) Bewegung(en), nach Anheben des Auslegers (26), fortzusetzen, wenn das Hinderniserkennungssystem (51, 52) aufgehört hat, ein Hindernis in der Nähe der Plattform (10) zu erkennen.

9. Hubarbeitsbühne nach einem der Ansprüche 1 bis 8, bei welcher:
- der Pendelarm (30) über eine Halterung (28) am oberen Ende des Auslegers (26) angebracht ist, wobei der Pendelarm (30) mit seinem ersten Ende an der Halterung (28) so angebracht ist, dass er durch Schwenken in Bezug auf die Halterung (28) angehoben und abgesenkt werden kann, und die Halterung (28) um eine horizontale Achse schwenkbar am oberen Ende des Auslegers (26) angebracht ist, die Halterung (28) Teil eines Plattform-Niveauhaltesystems (41, 42) ist, um den Boden (12) der Plattform (10) durch Schwenken der Halterung (28) im Wesentlichen horizontal zu halten, wenn sich die Neigung des Auslegers (26) in Bezug auf das Fahrgestell (2) ändert, wenn die Hubarbeitsbühne in Gebrauch ist,
- die Bordelektronik vorgesehen ist, um das Schwenken der Halterung (28) des Plattform-Niveauhaltesystems zu steuern;
- das Plattform-Niveauhaltesystem (41, 42) dazu vorgesehen ist, die Halterung (28) in Korrelation mit der Änderung der Neigung des Auslegers (26) autonom in Bezug auf die Steuerung des Schwenkens der Halterung (28) durch die Bordelektronik zu schwenken, und
- die Bordelektronik dazu vorgesehen ist, die Hubarbeitsbühne in zwei aufeinanderfolgenden Phasen automatisch in die kompakte Position zu bringen:
∘ einer ersten Phase, in der die Bordelektronik die Hebestruktur (20) so steuert, dass sie am Ende der ersten Phase dazu führt, dass sich die Hebestruktur (20) in einer Konfiguration befindet, die der kompakten Position der Hubarbeitsbühne entspricht, mit Ausnahme des Neigungswinkels des Auslegers (26) und möglicherweise des Schwenkwinkels der Halterung (28) des Höhenhaltesystems der Plattform (10), und dass die untere Vorderkante (12a) der Plattform (10) nicht in Kontakt mit dem Boden ist, und
∘ eine zweite Phase, in der die Bordelektronik die Neigung des Auslegers (26), das Schwenken der Halterung (28) des Systems zum Halten der Höhe der Plattform und eventuell das Anheben des Pendelarms (30) in Bezug auf die Halterung steuert, so dass am Ende der zweiten Phase die kompakte Position der Hubarbeitsbühne erreicht wird,
wobei:
- am Ende der ersten Phase der Schwenkwinkel der Halterung (28) des Plattform-Niveauhaltesystems so ist, dass der Pendelarm (30) unter dem Ausleger (26) eingeklappt ist, und
- in der zweiten Phase die Bordelektronik dazu vorgesehen ist, eine Sequenz anzuwenden, darin bestehend:
∘ i) Absenken des Auslegers (26), und
∘ ii) im Falle der Erkennung eines Hindernisses in der Nähe der Plattform (10) durch das Hinderniserkennungssystem (51, 52) das Absenken des Auslegers (26) zu stoppen und die Halterung (28) des Plattform-Niveauhaltesystems zu schwenken, um den Pendelarm (30) in Richtung des Auslegers (26) zu falten, und anschließend das Absenken des Auslegers (26) fortzusetzen, wenn die Erkennung der Nähe eines Hindernisses aufgehört hat,
und für den Fall, dass der Ausleger (26) während der genannten Sequenz bis zum unteren Anschlag abgesenkt wurde, die Bordelektronik eine zusätzliche Sequenz anwendet, um die untere Vorderkante (12a) der Plattform (10) in Bodenkontakt zu bringen, indem die Halterung (28) des Plattform-Niveauhaltesystems geschwenkt wird, um den Pendelarm (30) vom Ausleger (26) weg zu bewegen, und/oder indem der Pendelarm (30) relativ zur Halterung (28) des Plattform-Niveauhaltesystems angehoben wird.

10. Hubarbeitsbühne nach Anspruch 9, bei welcher:
- die Konzeptionierung der Hebestruktur in Bezug auf ihre Bewegungsmöglichkeiten jede Möglichkeit ausschließt, dass die Plattform (10) mit einem anderen Teil der Hubarbeitsbühne interferiert, und
- die Bordelektronik so vorgesehen ist, dass sie beim Schwenken der Halterung (28) des Plattform-Niveauhaltesystems in Schritt (ii) die Sequenz der zweiten Phase diesen in Anschlag schwenkt, und/oder die Bordelektronik so vorgesehen ist, dass sie die Halterung (28) des Plattform-Niveauhaltesystems so schwenkt, dass sie am Ende der ersten Phase anschlägt.

11. Hubarbeitsbühne nach Anspruch 9 oder 10, bei welcher die Merkmale eines der Ansprüche 5 bis 8 während der Durchführung der ersten Phase durch die Bordelektronik implementiert werden.

12. Hubarbeitsbühne nach einem der Ansprüche 1 bis 11, bei welcher die Bordelektronik dazu vorgesehen ist, die Abwesenheit von Lasten und/oder Personen an Bord der Plattform (10) zu überprüfen, vorzugsweise durch Zusammenarbeit mit einem System zur Messung der auf der Plattform vorhandenen Last und/oder einem System zur Erkennung des Anlegens eines Gurts für Person(en) an Bord der Plattform, bevor die Hubarbeitsbühne automatisch in die kompakte Position gebracht wird.

13. Hubarbeitsbühne nach einem der Ansprüche 1 bis 12, bei welcher die Bordelektronik zusätzlich dazu vorgesehen ist, die Hubarbeitsbühne aus der kompakten Position, in die die Hubarbeitsbühne zuvor automatisch durch die Bordelektronik gebracht wurde, automatisch in die Zugangsposition zur Plattform (10) zu bringen, wobei in der Zugangsposition der Boden (12) der Plattform (10) im Wesentlichen horizontal und in einem Abstand zum Boden ist, der es einem Bediener am Boden ermöglicht, die Plattform (10) zu betreten.

14. Hubarbeitsbühne nach Anspruch 13, bei welcher beim Einnehmen der Zugangsposition der Hubarbeitsbühne die Bordelektronik dazu vorgesehen ist, automatisch eine Sequenz anzuwenden, die die folgenden aufeinanderfolgenden Schritte umfasst:
a) Anheben des oberen Endes des Auslegers (26) für eine vorbestimmte Zeit, vorzugsweise durch Anheben des Gelenkarms (24) oder, falls nicht vorhanden, des Auslegers (26);
b) Schwenken der Halterung (28) des Plattform-Niveauhaltesystems (41, 42), bis der Boden (12) der Plattform (10) im Wesentlichen horizontal ist, indem er mit einer Vorrichtung zur Bestimmung der Horizontalität des Bodens (12) zusammenwirkt;
c) vollständiges Absenken des Auslegers (26) und ggf. des Gelenkarms (24);
d) Absenken des Pendelarms (30) in Bezug auf den Ausleger (26) in eine maximal abgesenkte Position oder auf ein mit der Umgebung kompatibles Absenkniveau, um eine Wechselwirkung der Plattform (10) mit der Umgebung zu vermeiden, welches Absenkniveau auf der Grundlage der von dem Hinderniserkennungssystem (51, 52) gelieferten Erkennungsinformationen bestimmt wird.

## Claims

1. An aerial work platform able to be transported on a trailer or flatbed lorry, comprising:
- a chassis (2) provided with members for translation on the ground (4),
- a work platform (10) comprising a deck (12) and a guardrail (14),
- a lifting structure (20) arranged on the chassis (2) and comprising:
∘ a boom (26) able to be raised and lowered by modifying the inclination thereof with respect to the chassis (2),
∘ a pendular arm (30) mounted by a first end on the top end of the boom (26) so as to be able to be raised and lowered with respect to the boom (26) by pivoting, the pendular arm (30) supporting the platform (10) at a second end, which is on the side opposite to its first end,
- an obstacle detection system (51, 52) for detecting the proximity of the platform (10) to an obstacle,
**characterized in that** the aerial work platform further comprises on-board electronics designed to automatically put the aerial work platform in a compact position at the request of an operator, the on-board electronics being designed to control the lifting structure (20) according to the detection information supplied by the obstacle detection system (51, 52) so as to automatically bring the aerial work platform, taking account of the surroundings of the aerial work platform, into a compact position in which the aerial work platform is suitable for transport on a trailer or flatbed lorry.

2. The aerial work platform according to claim 1, wherein the obstacle detection system comprises at least one proximity sensor (51, 52), preferably two, for detecting the proximity both of an obstacle under the deck (12) of the platform (10) and of an obstacle in front of the front side (15) of the platform (10) that is opposite to the pendular arm (30).

3. The aerial work platform according to claim 1 or claim 2, wherein the on-board electronics is designed to control the lifting structure (20) so that, in the compact position, the pendular arm (30) is folded under the boom (26) and the deck (12) of the platform (10) is inclined with respect to the horizontal so that the bottom front edge (12a) of the platform (10) is directed towards the ground and in contact therewith, the on-board electronics being designed to bring the front edge of the deck in contact with the ground by maximising the lowering of the top end of the boom (26).

4. The aerial work platform according to any of claims 1 to 3, wherein:
- the boom (26) is telescopic, the on-board electronics being designed to control the lifting structure so that, in the compact position, the boom (26) is completely retracted, and/or
- the platform (10) is able to be pivoted about a vertical axis with respect to the pendular arm (30), the on-board electronics being designed to control the lifting structure so that, in the compact position, the platform (10) is centred with respect to the pendular arm (30); and/or
- the boom (26) is mounted on the chassis (2) by means of an articulated arm (24) supporting at its top end the boom, wherein:
∘ the boom (26) is able to be raised and lowered by modifying its inclination with respect to the articulated arm (24), and
∘ the top end of the articulated arm (24) is able to be raised and lowered vertically by respectively unfolding and folding the articulated arm,
the on-board electronics being designed to control the lifting structure so that, in the compact position, the articulated arm (24) is completely lowered.

5. The aerial work platform according to any of claims 1 to 4, wherein, during the putting in the compact position, the on-board electronics is designed to control the lifting structure (20) so as to raise the top end of the boom (26) in the event of detection of an obstacle in the vicinity of the platform (10) by the obstacle detection system (51, 52).

6. The aerial work platform according to any of claims 1 to 5, wherein, when putting in the compact position, the on-board electronics is designed to raise the boom (26) in the event of detection of an obstacle in the vicinity of the platform (10) by the obstacle detection system (51, 52).

7. The aerial work platform according to claim 6, wherein the on-board electronics is designed to raise the boom (26) for a predetermined period (t2) in the event of detection of an obstacle.

8. The aerial work platform according to claim 6 or claim 7, wherein the on-board electronics is also designed to stop the current movement or movements of the lifting structure (20) when an obstacle is detected in the vicinity of the platform (10), and then to continue the current movement or movements after having raised the boom (26) if the obstacle detection system (51, 52) has ceased to detect an obstacle in the vicinity of the platform (10).

9. The aerial work platform according to any of claims 1 to 8, wherein:
- the pendular arm (30) is mounted at the top end of the boom (26) by means of a support (28), the pendular arm (30) being mounted by its first end on the support (28) so as to be able to be raised and lowered by pivoting with respect to the support (28) and the support (28) being mounted so as to pivot about a horizontal axis at the top end of the boom (26), the support (28) forming part of a system (41, 42) for keeping the platform level in order to keep the deck (12) of the platform (10) substantially horizontal by pivoting the support (28) in the event of modification of the inclination of the boom (26) with respect to the chassis (2) when the aerial work platform is in use,
- the on-board electronics is designed to be able to control the pivoting of the support (28) of the system for keeping the platform level;
- the system (41, 42) for keeping the platform level is designed to pivot the support (28) in correlation with the modification of the inclination of the boom (26) autonomously with respect to the control of the pivoting of the support (28) by the on-board electronics, and
- the on-board electronics is designed to automatically bring the aerial work platform into the compact position in two successive phases:
∘ a first phase in which the on-board electronics controls the lifting structure (20) so as to ensure, at the end of the first phase, that the lifting structure (20) is in a configuration corresponding to the compact position of the aerial work platform, except with regard to the angle of inclination of the boom (26) and optionally the angle of pivoting of the support (28) of the system for keeping the platform (10) level, and in that the bottom front edge (12a) of the platform (10) is out of contact with the ground, and
∘ a second phase in which the on-board electronics controls the inclination of the boom (26), the pivoting of the support (28) of the system for keeping the platform level and optionally the raising of the pendular arm (30) with respect to the support so as, at the end of the second phase, to result in the compact position of the aerial work platform,
wherein:
- at the end of the first phase, the pivoting angle of the support (28) of the system for keeping the platform level is such that the pendular arm (30) is folded under the boom (26) and
- during the second phase, the on-board electronics is designed to apply a sequence consisting of:
∘ i) lowering the boom (26), and
∘ ii) in the event of detection of an obstacle in the vicinity of the platform (10) by the obstacle detection system (51, 52), stopping lowering the boom (26) and pivoting the support (28) of the system for keeping the platform level in order to fold the pendular arm (30) towards the boom (26), and then to continue to lower the boom (26) if detection of the proximity of an obstacle has ceased,
and, in the case where the boom (26) has been lowered until it is in bottom abutment during said sequence, the on-board electronics applies an additional sequence for bringing the bottom front edge (12a) of the platform (10) in contact with the ground by pivoting the support (28) of the system for keeping the platform level so as to move the pendular arm (30) away from the boom (26) and/or by raising the pendular arm (30) with respect to the support (28) of the system for keeping the platform level.

10. The aerial work platform according to claim 9, wherein:
- the design of the lifting structure with regard to its possibilities of movement excludes any possibility of interference of the platform (10) with another part of the aerial work platform, and
- the on-board electronics is designed so that, when it pivots the support (28) of the system for keeping the platform level in step (ii) of said sequence of the second phase, it pivots it until it is in abutment, and/or the on-board electronics is designed to pivot the support (28) of the system for keeping the platform level so as to be in abutment at the end of the first phase.

11. The aerial work platform according to claim 9 or claim 10, wherein the features of any of claims 5 to 8 are implemented during the execution of the first phase by the on-board electronics.

12. The aerial work platform according to any of claims 1 to 11, wherein the on-board electronics is designed to check the absence of a load and/or a person on board the platform (10) before automatically bringing the aerial work platform into the compact position, preferably by cooperating with a load measuring system present on the platform and/or a system for detecting the attachment of a harness for a person or persons on board the platform;

13. The aerial work platform according to any of claims 1 to 12, wherein the on-board electronics is furthermore designed to automatically put the aerial work platform in a position of access to the platform (10) from the compact position in which the aerial work platform was previously put automatically by the on-board electronics, in which access position the deck (12) of the platform (10) is substantially horizontal and at a distance from the ground enabling an operator on the ground to access the platform (10).

14. The aerial work platform according to claim 13, wherein, when the aerial work platform is put in the access position, the on-board electronics is designed to automatically apply a sequence comprising the following successive steps:
a) raising the top end of the boom (26), preferably by, for a predetermined time, lifting the articulated arm (24), or failing this, the boom (26);
b) pivoting the support (28) of the system for keeping the platform (41, 42) level until the deck (12) of the platform (10) is substantially horizontal by cooperating with a device for determining the horizontality of the deck (12);
c) completely lowering the boom (26) and where applicable the articulated arm (24);
d) lowering the pendular arm (30) with respect to the boom (26) in the maximum lowered position or to a lowered level compatible with the surroundings in order to prevent interference of the platform (10) with the surroundings, said lowering level being determined according to the detection information supplied by the obstacle detection system (51, 52).
